Europäisches Patentamt

European Patent Office

Office européen des brevets

(19)

(11) Numéro de publication: **0 162 183**
**B1**

(12) **FASCICULE DE BREVET EUROPEEN**

(45) Date de publication du fascicule du brevet: **07.12.88**

(51) Int. Cl.⁴: **B 21 F 27/20, B 23 K 11/32**

(21) Numéro de dépôt: **84870056.3**

(22) Date de dépôt: **24.04.84**

(54) **Procédé d'assemblage de structures métalliques tridimensionelles, et machine pour leur réalisation.**

(43) Date de publication de la demande:
**27.11.85 Bulletin 85/48**

(45) Mention de la délivrance du brevet:
**07.12.88 Bulletin 88/49**

(84) Etats contractants désignés:
**AT BE CH DE FR GB IT LI LU NL SE**

(56) Documents cités:
**EP-A-0 061 100**
**DE-A-2 212 291**
**DE-B-1 584 692**
**FR-A-2 177 030**

(73) Titulaire: **SISMO INTERNATIONAL**
**personenvennootschap met beperkte**
**aansprakelijkheid**
**Drapstraat 1**
**B-9288 Laarne-Kalken (BE)**

(72) Inventeur: **Casalatina, Silvano**
**Via C. Viola n.c. 25**
**I-11026 Pont-Saint-Martin Aosta (IT)**
Inventeur: **de Schutter, André**
**Drapstraat 1**
**B-9288 Laarne-Kalken (BE)**

(74) Mandataire: **Pieraerts, Jacques et al**
**Bureau Gevers S.A. rue de Livourne 7 bte 1**
**B-1050 Bruxelles (BE)**

Courier Press, Leamington Spa, England.

**Description**

Cette invention concerne un procédé d'assemblage de structures métalliques tridimensionnelles, comportant des treillis plans et des paires de fils transversaux perpendiculaires aux treillis plans et cela à l'aide d'une paire d'unités de soudage, équipée chacune d'une pluralité de paires d'électrodes adjacentes aux treillis qui peuvent être commandés en vue de souder une paire de fils transversaux à une paire de fils longitudinaux des treillis dans des zones correspondantes où ceux-ci se croisent, et un mécanisme d'avancement qui peut être commandé pour faire avancer la structure après l'opération de soudage des éléments transversaux aux treillis. L'invention concerne également une machine destinée à mettre en oeuvre ce procédé.

Un tel procédé et une machine sont connus de la demande de brevet allemand DE-A-2 212 291 qui vise la production d'un support ou d'un renforcement pour produits en béton permettant la disposition d'un treillis par dessus un autre à une distance prédéterminée.

Ensuite, deux machines de soudage, chacune comportant paire de couples d'électrodes, assurent le soudage de deux paires de fils transversaux sur les deux treillis. Chaque fil transversal présente la forme d'un U et se trouve sur le côté des treillis superposés et la paire de fils transversaux sodés sur un côté des treillis définisse chacun une boucle. Après l'opération de soudage, les électrodes des unités de soudage sont écartées des zones de soudage et les treillis sont déplacés par des organes de prise qui ne sont ni représentés ni décrits. La paire de fils transversaux disposés du même côté des treillis ne sont pas soudés les uns aux autres et la distance correcte entre les treillis après l'évacuation de ceux-ci hors de la machine est assurée par des barres appropriées inserrées dans les boucles entre les paires de fils en U, disposés sur les côtés opposées des deux treillis. Un procédé destiné à réaliser des supports ou des renforcements pour des produits en béton selon la demande DE-A-2 212 291 n'est pas adapté à la production de structures tridimensionnelles complexes qui doivent recevoir des éléments isolants pour former des paroies ou des plafonds complets.

La demande de brevet européen EP-A-0 061 100 décrit une structure tridimensionnelle réalisée en fils qui comprend une série de treillis plans, chaque treillis étant pourvu d'au moins une paire de fils longitudinaux et de fils d'entretoise. Les treillis présentent des espacements mutuels prédéterminés résultant d'une série de fils transversaux soudés aux treillis eux-mêmes et aux fils d'entretoise. Une telle structure forme des plans de support pour des corps allongés parallélipipédiques en matériaux isolants qui sont logés à l'intérieur de la structure. La réalisation de ces structures exige de très faible tolérance pour les divers composants et un alignement soigneux entre lesdites parties, au cours des étapes de soudage. Pour réaliser ces exigences de nombreuses opérations manuels sont nécessaires pour amener les unités de soudage dans ces zones de soudage où se trouvent les fils à souder et pour mettre les éléments en ligne et à niveau. Une telle méthode est donc inévitablement honéreuse. De plus, il est très difficile d'obtenir simultanément l'alignement dans un même plan les fils d'entretoise des diverses parties des structures et pour obtenir une structure parfaitement fiable.

Un objet de la présente invention est de réaliser un procédé et une machine destinés à assembler, par soudage, des structures tridimensionnelles comportant des treillis plans formés de fils longitudinaux et de fils transversaux afin de disposer ceux-ci dans un même plan et pour obtenir un assemblage rapide de la structure.

Le procédé est caractérisé par les étapes suivantes:

a) disposition d'une série de plus de deux support définissant une série de plans parallèles espacés les uns des autres selon un pas de formation de treillis déterminés présentant des moyens d'alignement pour définir un plan d'alignement commun perpendiculaire auxdits plans parallèles;

b) disposition dudit mécanisme d'avancement comportant plusieurs leviers dentés associés auxdits supports et connectés par un organe de manoeuvre de dents dans lequel l'organe de manoeuvre de dents peut être commandé en vue de déplacer chaque levier denté le long d'une trajectoire correspondant à un des plans parallèles et dans lequel chaque levier denté présente au moins un bord de contrôle aligné sur un plan perpendiculaire auxdits plans parallèles;

c) disposition d'une série desdits plans de treillis dans lesquels les divers successions de fils d'entretoise sont soudées à une paire de fils longitudinaux selon un pas déterminé propre aux fils d'entretoise;

d) disposition de chaque série de treillis sur un support commun appartenant à ladite série de supports de telle façon que lesdites séries de treillis ont au moins une paire de dits fils longitudinaux disposés dans un plan commun et parallèle audit plan d'alignement commun;

e) commande de l'organe de manoeuvre de dents en vue de réaliser des déplacements desdits treillis le long de plans parallèles grâce à l'action du bord de contrôle de chaque dent sur une même série de fils d'entretoise de ladite série de treillis jusqu'à amener dans la position voulue lesdits treillis par rapport auxdites électrodes afin de mettre lesdits fils d'entretoise dans un même plan et de définir un plan de support;

f) disposition d'une paire de fils transversaux en vue de croiser les fils longitudinaux d'une série de treillis dans les zones de croisement correspondantes;

g) commande d'une paire d'unités de soudage en vue de souder lesdits fils transversaux aux séries de treillis et de les évacuer ensuite de la zone de croisement;

h) commande de l'organe de manoeuvre de dents pour faire avancer ladite série de treillis à déplacer le long des plans parallèles d'un pas correspondant à celui des fils transversaux grâce à l'action desdits leviers dentés;

i) répétition des étapes f) à h) jusqu'à ce que les paires de fils transversaux ont été soudées aux fils longitudinaux desdites séries de treillis.

La demande DE-A-2 212 291 décrit également un dispositif permettant d'assembler des treillis plans par paires, en soudant les fils longitudinaux parallèles aux fils transversaux alimentés à partir d'une trémie appropriée. Les fils longitudinaux sont amenés par un mécanisme des fils longitudinaux, à mouvement alternatif.

Un autre objet de la présente invention est de réaliser des treillis plans destinés à des structures tridimensionnelles comprenant des fils longitudinaux et des fils transversaux qui doivent être soudés aux fils longitudinaux dans lesquels le pas des fils transversaux est défini de manière exacte.

Cette invention concerne, selon un second aspect, plus spécifiquement, un procédé permettant de réaliser des treillis plans destinés à des structures métalliques tridimensionnelles, qui est caractérisé par les étapes suivantes:

a) prévision d'un dispositif pour l'alimentation des fils et comportant une trémie disposée en avant par rapport à ladite zone de soudage et comprenant un groupe desdits fils d'entretoise, un organe de manoeuvre pour libérer sélectivement chaque fil d'entretoise, des barres inclinées pour guider un fil d'entretoise relâché et le repousser en arrière par rapport à ladite électrode fixe et des ailes d'arrêt pour arrêter dans ladite zone de soudage perpendiculairement aux fils longitudinaux ledit fil d'entretoise relâché;

b) prévision d'au moins un dispositif de coupe qui peut être commandé pour définir un plan de coupe adjacent aux fils longitudinaux et perpendiculaires audit plan des treillis pour définir la largeur du treillis;

c) prévision d'un dispositif d'alimentation de fils longitudinaux équipé d'une dent pour être déplacé le long d'une trajectoire qui interfère avec un fil d'entretoise soudé, à l'aide d'une chaîne entraînée par l'axe d'un moteur, commandé par un codificateur d'extension et un microprocesseur;

d) disposition d'une paire de fils longitudinaux et d'autres fils longitudinaux sur lesdits moyens de support;

e) commande de l'organe de manoeuvre du mécanisme d'alimentation de fils d'entretoise afin de disposer un fil d'entretoise à angle droit avec les fils longitudinaux bloqués par lesdites ailes d'arrêt et commande de l'unité de soudage des treillis en vue de souder les fils longitudinaux terminaux et les autres fils longitudinaux audit fil d'entretoise aux points de croisement respectifs.

f) commande du dispositif de coupe en vue de couper des parties desdits fils d'entretoise de référence situés à l'extérieur par rapport aux fils longitudinaux d'extrémité d'un treillis;

g) commande en avant de l'arbre du moteur de l'organe d'avancement en vue d'engager ladite dent au contact d'un fil d'entretoise pour déplacer en avant le treillis sur une distance définissant le pas entre deux fils d'entretoise du treillis;

h) répétition des étapes e) à g) jusqu'à ce que les soudages d'un treillis soient complètement réalisées et enlèvement du treillis hors de la machine;

i) commande en marche arrière de l'arbre du moteur dudit organe d'avancement pour renvoyer ladite dent dans ladite zone de soudage; et

j) répétition des étapes d) à i).

D'autres détails et avantages de l'invention ressortiront de la description qui sera donnée ci-après à titre d'exemple non limitatif en se référant aux figures ci-après:

La figure 1 est une vue d'ensemble schématique des machines d'assemblage conforme à l'invention;

la figure 2 est une vue, en perspective, d'une machine à assembler selon la figure 1;

la figure 3 est une vue en plan, schématique et partielle, de la machine selon la figure 2;

la figure 4 est une vue latérale de la machine selon la figure 3, en position de fonctionnement;

la figure 5 représente une vue de face des détails de la machine selon la figure 2;

la figure 6 représente des détails de la figure 5, dans une phase de fonctionnement;

la figure 7 est une vue latérale des éléments de la machine selon la figure 2;

la figure 8 représente des détails de la figure 7, dans une phase de fonctionnement;

la figure 9 est une vue schématique, selon la coupe IX-IX, de la figure 4;

la figure 10 représente une section schématique de détails de la machine selon la figure 2;

la figure 11 est une vue schématique d'un autre détail de la machine selon la figure 2;

la figure 12 est une vue en plan d'une variante d'un détail de la machine selon la figure 2;

la figure 13 est une vue latérale schématique de la variante selon la figure 12;

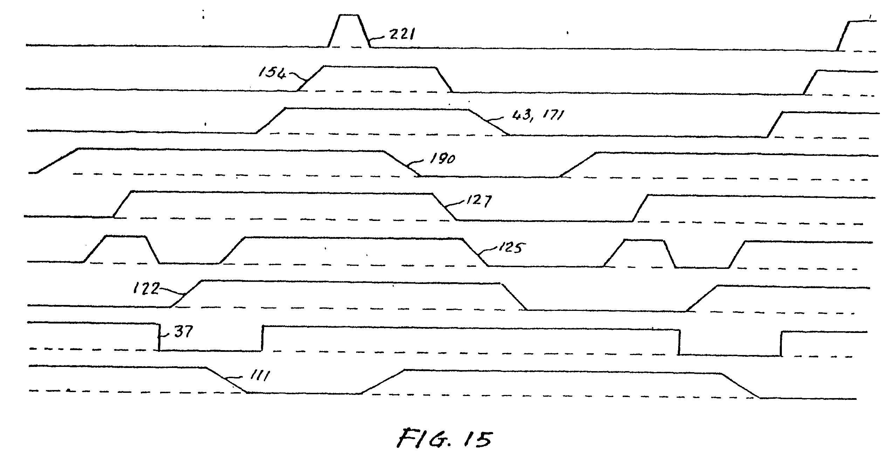

la figure 14 représente dans une phase de fonctionnement les éléments selon la figure 12;

la figure 15 représente un diagramme de fonctionnement de la machine selon la figure 2;

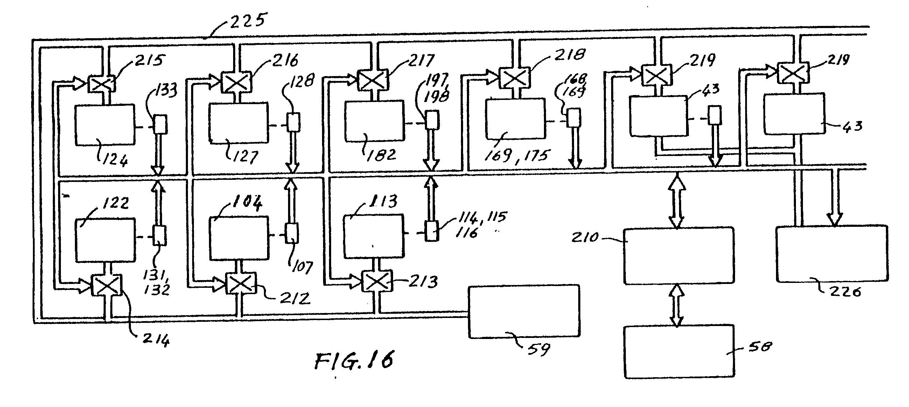

la figure 16 représente un schéma de l'ensemble de la machine selon la figure 2;

la figure 17 est une vue schématique en plan d'une deuxième machine selon la figure I;

la figure 18 est une vue latérale schématique de la machine selon la figure 17;

la figure 19 est un schéma par groupes de la machine selon la figure 17;

la figure 20 est un schéma par groupes généraux des opérations intervenant dans le procédé selon l'invention.

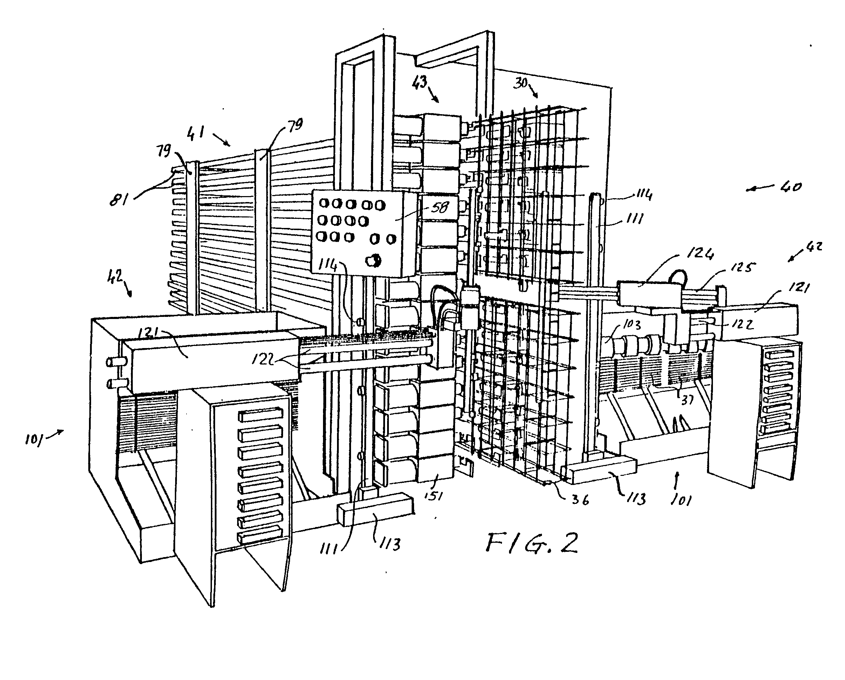

Le procédé d'assemblage selon l'invention est destiné à réaliser, par exemple mais non exclusivement, des structures métalliques tridimensionnelles 30 (figure 2) du genre décrit dans la demande de brevet européen EP-A-0 061 100 publiée le 29.9.82. Ce procédé a pour but, en particulier, d'assembler des treillis plans 36 réalisés en fils d'acier avec des fils transversaux 37 et prévoit, de préférence, l'utilisation d'une machine permettant l'assemblage de la structure tridimensionnelle 40.

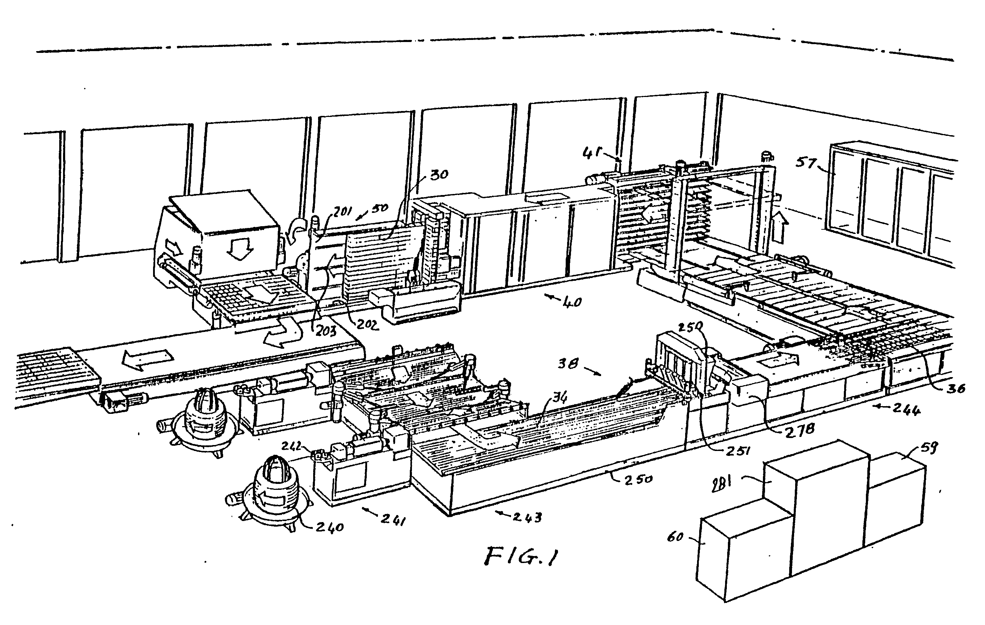

Les treillis 36 comprennent des fils longitudinaux 34 et des fils d'entretoise 35 et sont, dans une phase antérieure à celle qui consiste à assembler la structure tridimensionnelle, réalisés au moyen d'une soudeuse plate 38 (figure 1).

La machine d'assemblage 40 (figure 2) comprend une structure de support 41 qui soutient les treillis 36, un groupe d'alimentation 42 à partir duquel sont prélevés les fils transversaux 37 pour être soudés aux treillis 36, une série d'unités de soudure 43 et un groupe d'avancement 45 pour la structure 30, au cours de l'assemblage, et un ensemble de collecte 50 (figure 1).

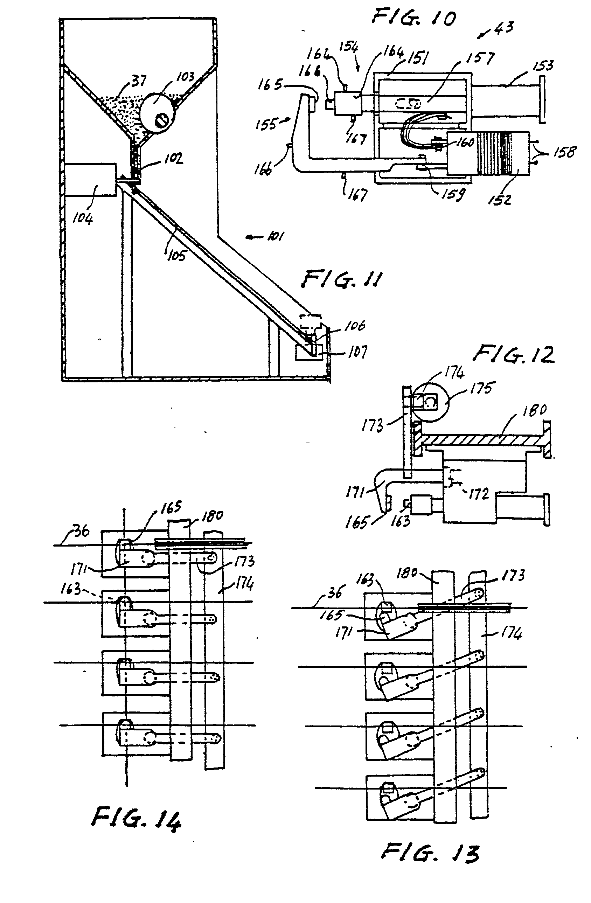

La machine prévoit en outre un groupe électronique 57 (figure 10) pour la commande séquentielle des différentes phases d'assemblage et de soudure, une console de commande 58, une unité pneumatique 59 pour la réalisation des commandes ou ordres envoyés par l'unité 58 et une unité hydraulique 60 pour le refroidissement des électrodes de soudure des machines d'assemblage 38 et 40.

La description qui suit vise la structure de soutien.

La structure de soutien 41 comporte un groupe de montants 79 sur lesquels sont fixées à des distances prédéterminées, par paires, une série de traverses 80. Les traverses 80 soutiennent, à leur tour, une série de plans d'appui 81 horizontaux et superposés. Les distances entre les plans 81 sont égales entre elles et règlent le pas transversal des treillis plans 36 par rapport à la structure 30 déjà assemblée.

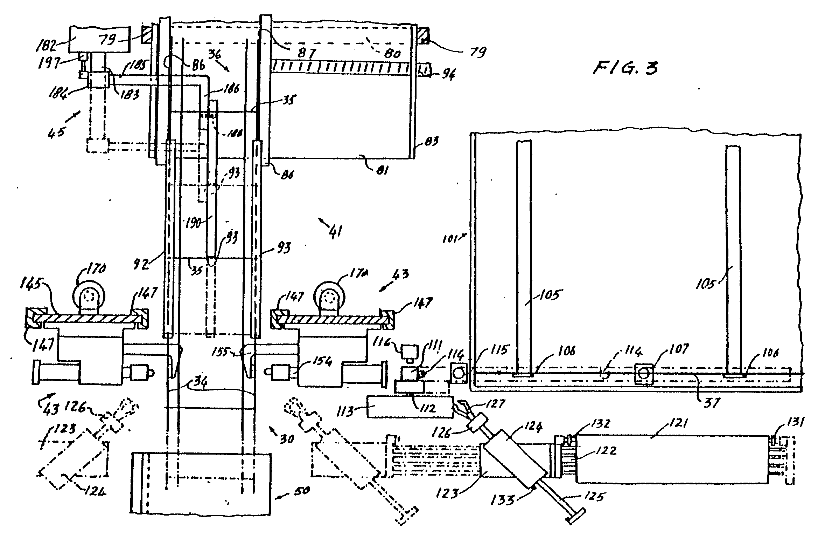

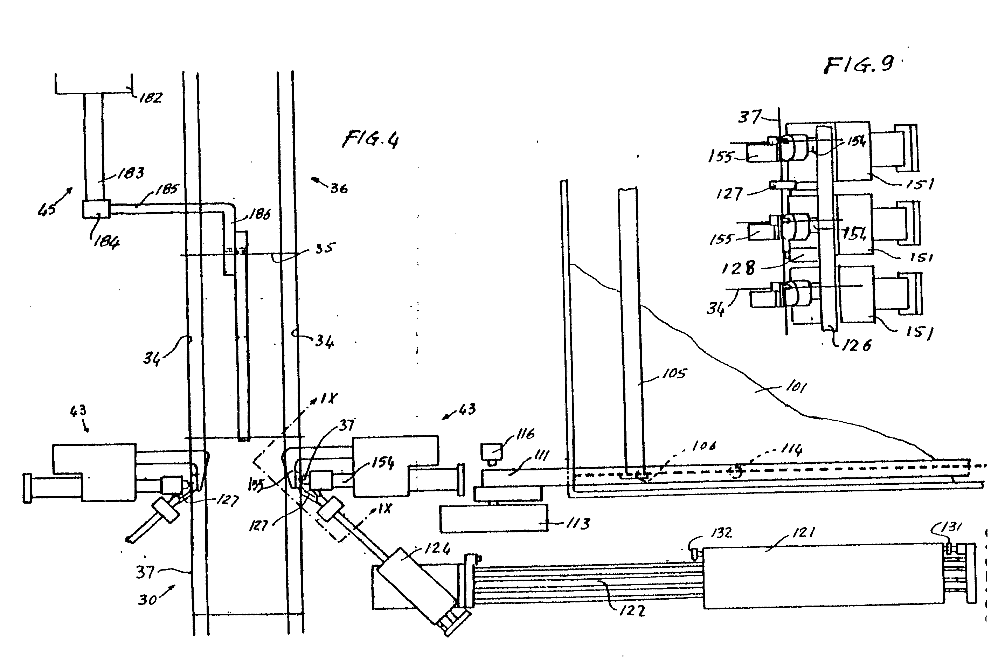

Les plans 81 (figure 3) sont de forme rectangulaire très allongée et sont pourvus de deux côtés latéraux 82 et 83, respectivement gauches et droites, si l'on se réfère à la figure 4, et soutiennent un treillis correspondant plan 36.

Un élément de contrôle 83, formé d'un tréfilé de section rectangulaire, est fixé à chaque côté 82 et est pourvu d'une surface de contrôle 85 capable de collaborer avec les extrémités, à gauche à la figure, des fils d'entretoise 35 des treillis 36. Les surfaces 85 des éléments de contrôle 83 des différents plans 81 sont situées dans le même planet définissent une surface de repère verticale de la structure tridimensionnelle 30.

Un autre élément de contrôle 86, constitué également d'un tréfilé de section rectangulaire, est fixé, de façon réglable au côté 83 de chaque plan 81 et est pourvu d'une surface 87 avec laquelle peuvent collaborer les extrémités, à droite à la figure, des fils d'entretoise 35 des treillis 36. Les surfaces 87 des éléments de contrôle 86 sont situées dans le même plan et définissent un autre plan de repère vertical de la structure tridimensionnelle 30, parallèle au plan vertical défini par les surfaces 85. Ces deux plans de repère sont tels qu'ils amènent les fils longitudinaux 34 dans le même plan, du même côté des différents treillis 36 et sont, en outre, perpendiculaires aux plans des mêmes treillis 36. Sur une extrémité, à la partie antérieure, selon la figure 3, des éléments de contrôle 85 et 86, sont fixés des éléments de guidage 92 et 93 formés de tréfilés de section en U faisant saillie hors des plans 81. Ces éléments collaborent avec les extrémités des fils d'entretoise 35 ainsi qu'avec les fils longitudinaux 34 des treillis plans 36 et servent à définir avec précision les plans verticaux de repère de la structure 30 et à éviter le gauchissement des treillis 36 dans la zone proche de l'extrémité de sortie des éléments de guidage 92 et 93, adjacents aux unités de soudure 43.

Les éléments de contrôle 87 et les éléments de guidage 93 sont déplaçables par rapport aux côtés 83, par exemple à l'aide de vis 94. De cette façon, la distance entre plans de repère des surfaces 87 et les éléments de guidage 92 peut être modifiée soit par rapport au plan de repère des surfaces 85, soit par rapport aux éléments de guidage 93, pour définir exactement les plans de repère verticaux des structures 30 utilisant des treillis 36 de différentes largeurs.

Un groupe d'alimentation fait suite à la structure de soutien. Ce groupe d'alimentation 42 est divisé en deux unités, dont chacune comprend une trémie 101 (figure 2) dans laquelle sont disposés tels quels des fils transversaux 37. Les fils pénètrent par gravité dans un canal de sortie 102 (figure 11) et cette opération est facilitée par l'action d'un excentrique 103. Un dispositif 104 est ménagé pour laisser tomber un à un les fils 37 qui, après avoir été guidés par les barres inclinées 105, s'arrêtent à la base des barres 105, en butant contre des épaulements 106. La présence du fil 37, retenu contre les épaulements 106, est détectée par un signaleur magnétique 107 qui transmet, sous forme de signaux électriques, les informations en question à l'unité de contrôle 57.

Entre le support 41 et les trémies 101 (figure 3) sont prévus deux bras de prise 111, formés chacun par une barre parallélépipédique avec un point d'appui à une extrémité et un arbre de sortie 112 d'un organe de manoeuvre pneumatique 113. Cet organe de manoeuvre 113 est prévu pour faire tourner le bras de prise d'une position horizontale vers une position verticale. Chaque bras de prise 111 est, dans sa position horizontale, substantiellement aligné et superposé au fil 37 temporairement arrêté contre les épaulements 106 et à proximité du fil même. Un nombre d'aimants 114 sont disposés pour écarter le fil 37 des épaulements 106 et pour le maintenir sur le bras 111 en alignement avec l'axe du même bras.

Cette position reste inchangée même lorsque le bras 111 est en position verticale. Deux senseurs 115 et 116 ont, en outre, pour tâche de détecter respectivement la position horizontale et la position verticale du bras 111 et de transmettre l'information à l'unité de contrôle 57.

Face à la trémie 101 (figures 2 et 3), sont disposés deux organes de manoeuvre pneumatiques 121, pourvus de pistons 122, mobiles dans un plan horizontal suivant une direction perpendiculaire aux plans de repère des surfaces 85 et 86. Sur les pistons 122 sont fixés deux blocs de support correspondants 123 sur lesquels sont fixés à leur tour deux autres organes de manoeuvre pneumatiques 124. Ces organes de manoeuvre 124 sont pourvus de pistons 125 qui sont mobiles horizontalement suivant une direction inclinée de 45° par rapport aux plans de repère des surfaces 85 et 86. Les pistons 125 supportent deux montants 126 auxquels sont fixées deux séries correspondantes de pinces 127, à fonctionnement pneumatique, capables d'écarter les fils 37 des bras 111 et à les maintenir parallèlement aux montants 126. Des senseurs 128 permettent de détecter la présence d'un ou de plusieurs fils 37 retenus par les pinces 127. Les supports 123 peuvent être écartés des pistons 122 depuis des positions latérales à proximité des trémies vers de positions centrales ·voisines des unités de soudure 43 et des éléments de guidage 92 et 93. Les montants 126 peuvent, à leur tour, être écartés des pistons 125 à partir de positions éloignées des trémies 101 et des éléments de guidage 92 et 93 vers des zones proches des bras 111, disposés en position verticale, et des unités de soudure 43.

Des senseurs de fin de course 131 et 132 des organes de manoeuvre 121 détectent respectivement les positions latérales et centrales des blocs 123 et des senseurs de fin de course 133 des organes de manoeuvre 124 détectent les positions des montants 126 à proximité des bras 111 et des unités de soudure 43. En outre, des senseurs magnétiques 134 détectent la présence des fils 37 sur les montants 126, alors qu'ils sont maintenus par des pinces 127. Les informations des senseurs 134 sont également transmises à l'unité de contrôle 57. Les trémies 101 sont disposées pour accepter chacune, avec des éléments de séparation appropriés, deux séries de fils transversaux 37, d'une longueur à peine inférieure à la largeur maximale de la trémie elle-même. Les barres inclinées 105, les bras de prise 111, les montants 126, les pinces 127 et les différents senseurs sont capables de traiter à la fois deux fils 37 alignés entre eux et proches l'un de l'autre. Ceci permet d'assembler en même temps deux structures tridimensionnelles ayant une hauteur légèrement inférieure à la moitié d'une structure de hauteur maximale.

Les unités de soudure 43 (figure 3) sont divisées en deux groupes montés respectivement sur deux plaques 145 et 146. Ces plaques sont montées à glissement sur des montants verticaux 147 disposés à gauche et à droite des éléments de guidage 92 et 93 de façon qu'à chaque paire d'éléments 92 et 93 soit associée une paire d'unités de soudure 43.

Chaque unité 43 comprend un corps 151 en forme de parallélépipède creux, sur lequel sont montés un transformateur 152, un organe de manoeuvre pneumatique 153, une électrode mobile 154 et une électrode de contraste 155.

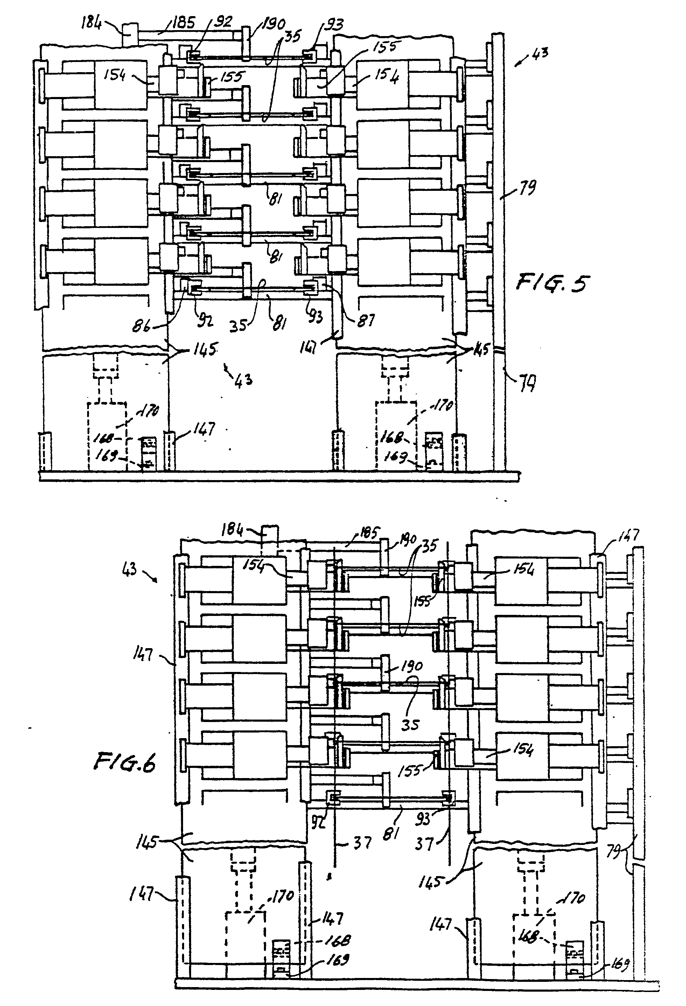

L'électrode mobile 154 est fixée à un piston 157 de l'organe de manoeuvre 153 qui, à son tour, est guidé par des douilles l'isolant du corps 151. L'électrode de contraste 155 a une corps en forme de L et est connectée électriquement au corps 151. Le transformateur 152 est inséré partiellement dans le corps parallélépipédique 151 et est pourvu d'un primaire dont les terminaux peuvent être connectés au réseau. Le secondaire du transformateur est pourvu de deux terminaux 159 et 160 connectés aux électrodes 154 et 155. Le terminal 159 est directement connecté à l'électrode 155, tandis que le raccord entre l'électrode 154 et le terminal 160 est assuré par une série de fines lames de cuivre, repliées en forme de U, qui permettent les déplacements du piston 157 par rapport au transformateur 152. La partie active de chaque électrode mobile 154 (figure 5) indiquée par 163, est de forme cylindrique et est disposée plus haut par rapport au piston 157, elle est connectée à celui-ci par un bloc 164. La partie active de chaque électrode 155, indiquée par 165, a la forme d'un parallélépipède et dépasse vers le haut l'électrode 155. Les blocs 164 des électrodes 154 et 155 sont traversés intérieurement par des canalisations de refroidissement, pourvues de petites embouchures d'entrée et de sortie 166 et 167 reliées à l'unité hydraulique 60.

En position de repos, les parties 163 et 165 des unités 43 sont disposées en dessous des plans des treillis 35 et chaque plaque 145, 146 est déplaçable verticalement par rapport aux montants 147. Un organe de manoeuvre 170 déplace vers le haut les unités de soudure 43 pour amener les parties 163 et 165 en alignement avec les plans des treillis 35. En outre, deux senseurs de fin de course 168 et 169 peuvent détecter, respectivement, les positions haute et basse des unités 43: Dans la variante selon les figures 12 et 13, les unités de soudure 43 sont montées sur deux plaques fixes 180. Chaque électrode de contraste, désignées par 171, est pourvue d'un bras de levier 173 et pivote autour d'une douille 172 parallèlement au piston 157. Les parties actives 163 des électrodes mobiles 154 sont mises en alignement avec les plans des divers treillis 36, tandis que les parties actives des électrodes 171 sont disposées en dessous de ces plans. Les bras 173 pivotent sur une bielle verticale unique 174 laquelle est, à son tour, reliée à un organe de manoeuvre pneumatique 175.

L'organe de manoeuvre 175 est conçu pour faire pivoter les électrodes 171 autour des douilles 172 de façon à porter les parties actives 164 en alignement avec les plans des treillis 36. Les senseurs 168 et 169 détectent, dans ce cas, les positions respectivement haute et basse des électrodes 171.

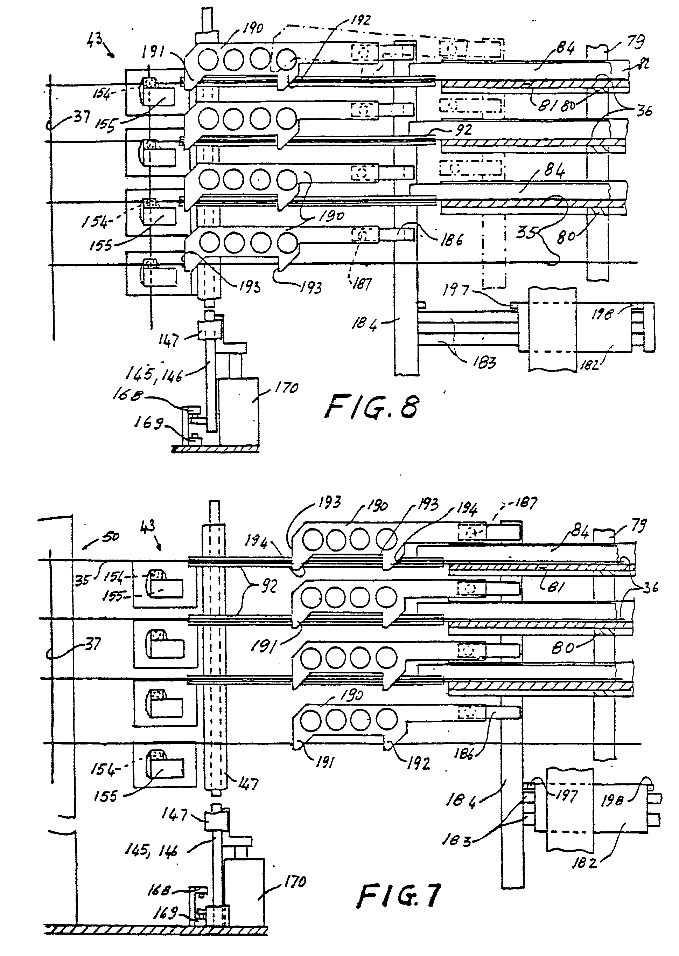

Le groupe 45, dénommé groupe d'avancement (figures 3 et 7) comprend un organe de manoeuvre pneumatique 182 pourvu de deux pistons 183 qui peuvent être déplacés parallèlement aux éléments de guidage 92 et 93. Sur les pistons 183 est montée une barre verticale 184 à laquelle sont fixés des bras horizontaux 185 en forme de L et disposés dans l'espace compris entre les plans des treillis 36. Les bras 185 ont une partie longitudinale 186 disposée dans le plan moyen entre les plans verticaux de repère définis par les éléments de guidage 92 et 93.

Sur chaque partie 186 pivote, au moyen d'un pivot 187, un levier denté 190, pourvu inférieurement d'une dent antérieure 191 et d'une dent postérieure 192. En position de repos, le levier 190 est maintenu en position horizontale par gravité et contre l'action d'un élément d'arrêt 188 de la partie 186. Chaque dent 191, 192, dans sa partie antérieure, comprend un bord correspondant de rencontre 193 substantiellement vertical et, dans sa partie postérieure, un bord incliné 194. Les bords de rencontre 193 des dents 191 et 192 sont alignés entre eux sur deux plans verticaux dont la distance est légèrement supérieure (à peu près 1 mm pour des fils métalliques de 0,6 - 0,7 mm) à la moitié du pas des fils d'entretoise 35 et des treillis 36. L'organe de manoeuvre 182 est conçu pour déplacer la barre 184, et donc les leviers 190 d'un trajet égal à la moitié du pas des fils d'entretoise 35. Une paire de senseurs de fin de course 197 et 196 vérifie avec précision les limites de fin de course et transmet les informations à l'unité de contrôle 57. Les bords de contrôle 193 sont conçus pour collaborer avec les fils d'entretoise 35 en vue de déplacer en même temps les treillis 36, tout en gardant le même plan des fils d'entretoise des différents treillis 36, soit avant l'assemblage de la structure 30, soit pendant le déplacement des treillis 36, au cours des opérations de soudure.

Particulièrement, en position de repos, les bords de contrôle 193 des dents 191 ou 192 sont disposés à proximité des fils et derrière les fils d'entretoise 35 des treillis 36. Par conséquent, lors d'un déplacement en avant des pistons 183, les bords 193 des dents 191, ou des dents 192, des leviers 190 entraînent les treillis 36 vers la partie antérieure de la machine, et cela d'une course égale à la moitié du pas des fils d'entretoise 35.

Pendant la course de retour, les fils d'entretoise 35, avec les bords inclinés 194, provoquent le soulèvement des leviers dentés 190 qui peuvent ainsi ramener à nouveau les bords 193 derrière les fils d'entretoise 35 en vue d'un nouvel avancement des treillis 36. Au cours des deux cycles de déplacement vers l'avant et vers l'arrière des leviers 190, les dents 191 et 192 n'agissent qu'une seule fois, mais dans les deux cycles sur un même fil d'entretoise 35. On réalise ainsi un pas des fils transversaux 37 substantiellement égal à la moitié du pas des fils d'entretoise 35 sur la structure 30 déjà assemblée.

En se référant à la figure 1, on remarquera que l'ensemble de collecte 50 comprend un plan de renversement 201 pourvu d'une base 202 pour ramasser la structure déjà assemblée et au moins une zone 203 capable de recevoir une console pour une deuxième structure quand la machine d'assemblage 40 assemble en même temps deux structures de hauteur réduite.

L'unité 57, dite unité de contrôle, comprend un microprocesseur 210 pourvu d'une série d'unités d'interfaces d'entrée-sortie. Les interfaces d'entrée reçoivent les données des senseurs détectant la présence des fils et des senseurs détectant la fin de course des organes de manoeuvre; les unités d'interface de sortie sont connectées à des relais, éventuellement, à des interrupteurs statiques qui commandent l'ouverture ou la fermeture de vannes 212-219, insérées entre le circuit d'air comprimé 225 de l'unité pneumatique 59 et, respectivement, des organes de manoeuvre 104, 113, 122, 124, 127, 182, 169 ou 175 ainsi que de tous les organes de manoeuvre 153 des unités de soudure 43.

Le microprocesseur 210 est prévu pour activer une unité de puissance 226 qui connecte au réseau les primaires des transformateurs 152 des unités 43. Le microprocesseur 210 est doté d'un programme qui commande la réalisation des différentes électro-vannes dans un ordre prédéterminé et en fonction de l'état des différents senseurs. Il est en outre connecté à une série d'organes de réglage pour permettre une variation dans les temps de soudure.

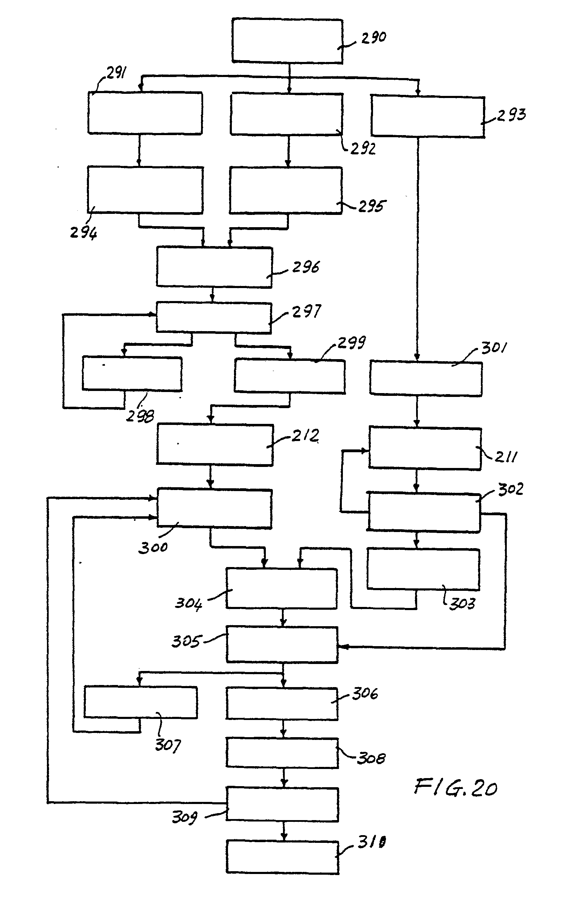

Le procédé d'assemblage est schématisé à la figure 20 et est conçu pour réaliser aux phases 211 et 212, la collecte des fils 37 dans les trémies 101 et le positionnement des treillis 36 (figure 3) sur les plans d'appui 81. On engage donc les fils longitudinaux 34 dans les divers éléments de guidage 92 et 93 jusqu'à ce que les fils d'entretoise 35 de la première série se trouvent placés devant les bords de contrôle 193 des dents 191.

La machine 40 est conçue pour travailler avec deux fils 37, ou quatre fils dans le cas où sont assemblées deux structures, déjà positionnés sur les bras 111 et cela en position verticale. Les blocs 123 se trouvent dans les positions latérales respectives et les montants 126 sont éloignés des bras 111. A ce stade, l'unité de contrôle 57 est prête à entamer l'assemblage de la structure 30. En actionnant la touche de démarrage, on met en marche les organes de manoeuvre 182 qui déplacent les leviers respectifs 190 en direction de la partie antérieure de la machine, faisant ainsi avancer simultanément les treillis 36 non encore assemblés. Par conséquent, pendant que les fils d'entretoise 35 de la première série sont correctement mis en place dans un même plan, les fils longitudinaux 34 sont amenés dans les zones de soudures respectives.

Après le déplacement vers l'avant des treillis 36 détectés par les senseurs 198, l'unité de contrôle 57 met en marche les organes de manoeuvre 124 pour amener les montants 126 à proximité des bras 111. L'unité 57 commande la fermeture des pinces 127 sur les fils 37 et la reprise des fils sur les montants 126. Cet état de choses étant vérifié, l'unité 57 prévoit la mise en fonctionnement, du côté opposé, des organes de manoeuvre 124, en éloignant les montants 126, et donc les fils, des bras 111. L'unité 57 met en marche les organes de manoeuvre 121 pour déplacer les blocs de support 123 vers la zone de soudure.

L'unité de contrôle 57, après avoir vérifié, grâce aux senseurs 131, la nouvelle position des éléments actionne à nouveau les organes de manoeuvre 124 (figure 15), pour porter les fils 37 à proximité immédiate des fils longitudinaux 34. Attendu que les pistons 125 se déplacent sous un angle de 45° par rapport aux axes des électrodes et des fils 34, les fils 37 et les montants 126 peuvent se déplacer librement sans former obstacle à ces pièces. La nouvelle position des fils 37 est détectée par les senseurs 133. L'unité 57 réalise, à ce stade, le relèvement des plaques 145 et 146, ainsi que de toutes les unités de soudure 43, ou les bielles verticales 174 (figure 13) avec les seules électrodes 171, jusqu'à porter les parties actives 163 et 165 (figure 5) des électrodes en alignement avec les fils longitudinaux 43 et en axe avec les zones de croisement des fils transversaux 37 avec les fils longitudinaux 34. L'unité 57 prévoit en outre le fonctionnement des organes de manoeuvre 113 pour amener les bras 111 en position horizontale pour permettre le prélèvement d'une autre paire de fils 37 (ou de quatre fils, dans le cas de deux structures) hors des trémies 101.

Au cours de l'étape suivante, l'unité 57 prévoit la commande de tous les organes de manoeuvre 153 de toutes les unités de soudure 43. Par conséquent, les électrodes mobiles 154 amènent les fils croisés 34 et 37 au contact des électrodes de contraste respectives. L'unité 57 prévoit donc l'alimentation des primaires des transformateurs 152 et la soudure des fils 37 et 34 dans les zones de croisement respectives. Alors que les électrodes maintiennent encore les fils 34 et 37, l'unité 57 met en marche les organes de manoeuvre 182 en vue d'une course de retour vers la partie postérieure de la machine. Les leviers 190 sont donc retirés vers l'arrière et dépassent légèrement, par leurs dents postérieures 192, les fils d'entretoise 35 de la deuxième série. La nouvelle position des leviers 190 ayant été vérifée au moyen des senseurs 197, l'unité 57 commande l'ouverture des électrodes et des pinces et commande en sens 1 opposé les organes de manoeuvre 180 ou 75 pour porter les électrodes hors du trajet des fils d'entretoise 35. L'unité 57 ramène en outre les bras 111 en position verticale. L'unité 57 éloigne enfin les montants 126 et les blocs 123 de la zone de soudure, ramenant la machine dans sa position de départ.

La figure 3 montre, en points-tirets, la position des blocs 123 à proximité de la zone de soudure, les pinces 127 étant représentées ouvertes, et à l'écart de la zone de soudure. Les positions avancées des leviers dentés 190 et des treillis 36 sont représentées de la même manière. La figure 4 montre la disposition des organes de manoeuvre 121 et 124 en vue de la phase de soudure, les fils 35 étant alignés par les leviers dentés 190. La figure 8 montre les positions occupées par l'unité 43 pendant la phase de soudure et, en points-tirets, la phase de reprise d'un fil 35 par une dent 192.

La figure 15 montre le diagramme schématique, en fonction du temps, du passage du courant de soudure 221, du déplacement des électrodes mobiles 154 par rapport aux électrodes de contraste 157 ou 171 et du déplacement des unités 43 ou des électrodes 171. Sont aussi représentés, les déplacements des pinces 127, des organes de manoeuvre 122 et 123, du fil 37 sur les bras 105 ainsi que les déplacements des bras 111.

La description qui suit concerne la machine d'assemblage plane.

Les fils longitudinaux 34, avant leur soudure sur les fils d'entretoise 35, sont déroulés des dévidoirs 240 (figure 1) de grande capacité et sont préalablement redressés, au moyen d'une machine à dresser les fils 241. Cette machine, de type connu, n'est pas détaillée ici. Elle est, d'une manière générale, pourvue d'une série de rouleaux et de contrerouleaux de rectification 242 qui redressent les fils.

Au cours du redressement, les fils sont raidis sous l'effet du déroulement et des déformations dues à la torsion imprimée au cours de cette phase.

La machine d'assemblage 38 destinée aux treillis 36 comprend un banc allongé 245 ayant une zone d'entrée et une zone de sortie 244. Le banc 245 (figure 17) est pourvu d'une série de traverses 246 capables de retenir les fils longitudinaux 34. A leur tour, les fils longitudinaux 34, sont en outre tenus sommairement à distances réciproques prédéterminées par des guides appropriés 247 déplaçables le long des traverses. Dans la zone médiane du banc 245 sont, en outre, prévus des supports d'alignement 246 soigneusement calibrés et d'une longueur telle que les fils longitudinaux 34 viennent à être disposés substantiellement parallèlement entre eux dans une zone de repère à côté de la zone des supports aux-mêmes. Les fils 34 se trouvent substantiellement dans le même plan; la distance réciproque entre les fils mêmes est donc très précise et présente de très faibles tolérances, par rapport aux données du projet. A côté de la zone de sortie des supports 248, sont prévus un dispositif 250 pour l'alimentation des fils d'entretoise 35 et une unité de soudure 251. Le dispositif 250 est conçu pour qu'il puisse disposer chaque fil d'entretoise 35 de manière à croiser les fils longitudinaux 34, parallèles entre eux, de telle sorte que chaque fil soit aussi près que possible des ou en contact avec les fils 34 dans leur section de repère. Le dispositif 250 (figure 18) comprend en particulier une trémie 252 pourvue d'un canal de sortie 253 contrôlé par un organe de manoeuvre 254, une pluralité de barres inclinées 256 et une série de petites ailes d'arrêt 258.

L'unité de soudure 251 comprend une électrode fixe 260, disposée légèrement en dessous des fils 34 et transversalement aux fils dans leur zone de repère, et un groupe d'électrodes mobiles 261. La partie active de ces électrodes 261 est substantiellement parallèle à la partie active de l'électrode 260, et les électrodes 261 sont conçues pour se déplacer verticalement par rapport à l'électrode 260 sous l'action des organes de manoeuvre correspondants 262. Les électrodes 261, dans leur mouvement vers le bas, sont conçues pour coopérer avec un fil d'entretoise 35 et à pousser celui-ci contre les fils longitudinaux 34 lesquels, à leur tour, sont arrêtés par l'électrode fixe 260 dans les zones de croisement respectives en vue de la soudure successive des fils 34 et 35. La machine 38 comprend en outre un organe d'avancement 270 capable de faire avancer les fils longitudinaux par rapport aux électrodes 260 et 261 d'une valeur parfaitement égale au pas des fils d'entretoise. Ce dispositif comprend des dents transversales 272 déplacées par une chaîne 273 et capables d'engager les fils d'entretoise 35 après leur soudure. La course des dents 272 est soigneusement contrôlée par un codificateur d'extension 275 qui relève exactement les déplacements angulaires d'un axe 276 sur lequel est fixée une roue dentée coopérant avec la chaîne 271. Cette chaîne est, à son tour, déplacée par un servo-mécanisme comprenant un moteur 277 contrôlé par le codificateur d'extension en accord avec un programme synchronisé avec le mouvement des électrodes 261 et avec la soudure des fils. En aval du dispositif 250 est prévu un dispositif de coupe 278 actionné par un organe de commande pneumatique 279 et comprenant des ciseaux capables de couper exactement le fil d'entretoise 35 adjacent aux zones de soudure avec les fils longitudinaux 34 situés à l'extérieur du treillis. Les treillis mêmes ont donc des dimensions très précises, ce qui permet une succession précise des opérations d'assemblage de la structure 30 sur la machine 40.

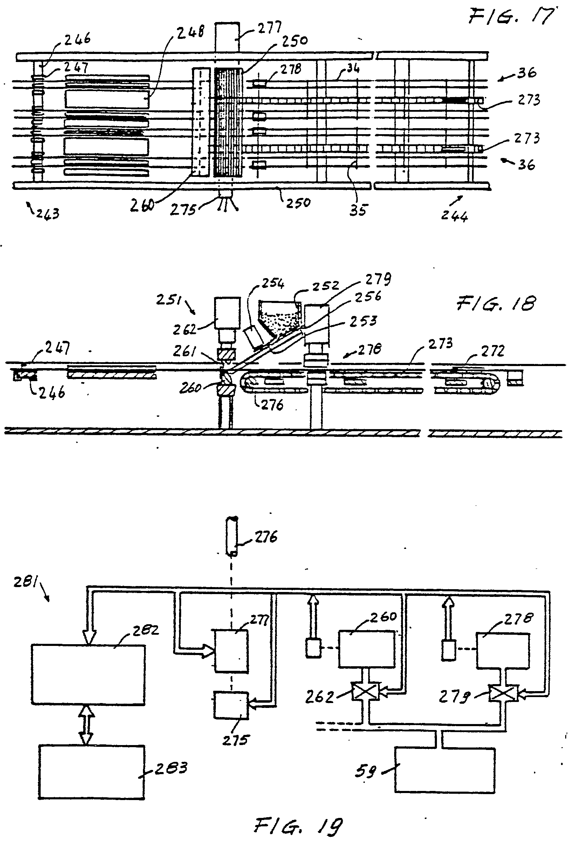

La machine 38 permet d'assembler en même temps plusieurs treillis. Cette opération est réalisée en utilisant un fil transversal unique pour plusieurs treillis. Ces derniers sont ensuite séparés au cours de la même phase de coupe qui suit la soudure. Les différentes phases d'avancement des treillis, de soudure et de coupe sont commandées à partir d'une unité de commande 281 qui comprend un microprocesseur 282 (figure 19) et une console de commande 283. Sur le microprocesseur 282 peuvent être programmés et synchronisés les différentes étapes de travail, l'étape d'avancement et les temps de soudure. La figure 20 résume les différentes phases d'assemblage de la structure 30.

Dans la phase 290 sont réalisées la soudure et la torsion des fils 34, 35 et 37 qui seront coupés respectivement dans les phases 291, 292 et 293. Au cours des phases 294 et 295, on place respectivement les fils 34 sur les supports 246 de la machine 38 et les fils 35 sur la trémie appropriée 252. Les fils 34 et 35 sont soudés dans la phase 296 et ensuite coupés dans la phase 297. Ensuite, alors que les dents transversales 272 reviennent vers la zone de soudure au cours de la phase 298, les treillis peuvent être ramassés en phase 299 et placés sur les plans d'appui 81 de la machine d'assemblage 40. Les fils transversaux 37 seront à leur tour ramassés dans les trémies 101 pendant la phase 211.

A partir d'ici a lieu la phase d'assemblage de la structure 30 qui prévoit l'avancement pas à pas des fils transversaux dans la phase 300, pendant que l'organe de manoeuvre 104 et les bras 111 ont disposé le fil 37 en position médiane dans la phase 303.

Suit alors le relèvement des électrodes en phase 305, la soudure en phase 306 et le retour des leviers 190 en phase 307. L'ordre d'abaisser les électrodes est donné ensuite en phase 309 et en phase 310 a lieu la collecte, sur le corps 50, de la structure assemblée.

**Revendications**

1. Procédé d'assemblage de structures métalliques tridimensionnelles, comportant des treillis plans (36) et des paires de fils transversaux (37) perpendiculaires aux treillis plans (36) et cela à l'aide d'une paire d'unités de soudage (43), équipée chacune d'une pluralité de paires d'électrodes (154, 155) adjacentes aux treillis qui peuvent être commandés en vue de souder une paire de fils transversaux à une paire de fils longitudinaux (34) des treillis dans des zones correspondantes où ceux-ci se croisent, et un mécanisme d'avancement (45) qui peut être commandé pour faire avancer la structure après l'opération de soudage des éléments transversaux (37) aux treillis (36), ladite méthode étant caractérisée par les étapes suivantes:

a) disposition d'une série de plus de deux supports (80) définissant une série de plans parallèles (81) espacés les uns des autres selon un pas de formation de treillis déterminés présentant des moyens d'alignement (85) pour définir un plan d'alignement commun perpendiculaire auxdits plans parallèles;

b) disposition dudit mécanisme d'avancement (45) comportant plusieurs leviers dentés (190) associés auxdits supports (80) et connectés par un organe de manoeuvre de dents (182) dans lequel l'organe de manoeuvre de dents peut être commandé en vue de déplacer chaque levier denté le long d'une trajectoire correspondant à un des plans parallèles et dans lequel chaque levier denté présente au moins un bord de contrôle (193) aligné sur un plan perpendiculaire auxdits plans parallèles;

c) disposition d'une série desdits plans de treillis dans lesquels les divers successions de fils d'entretoise (35) sont soudées à une paire de fils longitudinaux selon un pas déterminé propre aux fils d'entretoise;

d) disposition de chaque série de treillis (36) sur un support commun appartenant à ladite série de supports (80) de telle façon que lesdites séries de treillis ont au moins une paire de dits fils longitudinaux disposés dans un plan commnun et parallèle audit plan d'alignement commun;

e) commande de l'organe de manoeuvre de dents (182) en vue de réaliser des déplacements desdits treillis (36) le long de plans parallèles grâce à l'action du bord de contrôle (193) de chaque dent sur une même série de fils d'entretoise de ladite série de treillis jusqu'à amener dans la position voulue lesdits treillis par rapport auxdites électrodes afin de mettre lesdits fils d'entretoise (35) dans un même plan et de définir un plan de support;

f) disposition d'une paire de fils transversaux (37) en vue de croiser les fils longitudinaux (34) d'une série de treillis dans les zones de croisement correspondantes;

g) commande d'une paire d'unités de soudage (43) en vue de souder lesdits fils transversaux (37) aux séries de treillis et de les évacuer ensuite de la zone de croisement;

h) commande de l'organe de manoeuvre de dents (182) pour faire avancer ladite série de treillis à déplacer le long des plans parallèles d'un pas correspondant à celui des fils transversaux grâce à l'action desdits leviers dentés (190);

i) répétition des étapes f) à h) jusqu'à ce que les paires de fils transversaux (37) ont été soudées aux fils longitudinaux desdites séries de treillis.

2. Procédé d'assemblage des treillis plans (36) destinés à des structures métalliques tridimensionnelles (30) comportant une paire de fils longitudinaux (34) et des fils d'entretoise (35), à l'aide d'une unité de soudage (38) définissant une zone de soudage et qui peut être commandée en vue de souder les fils d'entretoise (35) aux fils longitudinaux (34) et un organe d'avancement (270) qui peut être commandé en vue de déplacer les treillis après le soudage d'un fil d'entretoise (35), ledit procédé comprenant des moyens de support (248) comportant des guides au voisinage de la zone de soudage pour guider une paire de fils longitudinaux et d'autres fils longitudinaux situés dans un même plan que celui du treillis plan, caractérisé par les étapes suivantes:

a) prévision d'un dispositif (250) pour l'alimentation des fils et comportant une trémie (252) disposée en avant par rapport à ladite zone de soudage (261) et comprenant un groupe desdits fils d'entretoise (35), un organe de manoeuvre (254) pour libérer sélectivement chaque fil d'entretoise, des barres inclinées (253) pour guider un fil d'entretoise relâché et le repousser en arrière par rapport à ladite électrode fixe et des ailes d'arrêt (258) pour arrêter dans ladite zone de soudage (261) perpendiculairement aux fils longitudinaux (34) ledit fil d'entretoise relâché;

b) prévision d'au moins un dispositif de coupe (278) qui peut être commandé pour définir un plan de coupe adjacent aux fils longitudinaux et perpendiculaires audit plan des treillis (36) pour définir la largeur du treillis;

c) prévision d'un dispositif d'alimentation de fils longitudinaux équipé d'une dent (272) pour être déplacé le long d'une trajectoire qui interfère avec un fil d'entretoise soudé, à l'aide d'une chaîne (273) entraînée par l'axe (276) d'un moteur, commandé par un codificateur d'extension (275) et un microprocesseur (282);

d) disposition d'une paire de fils longitudinaux (34) et d'autres fils longitudinaux sur lesdits moyens de support;

e) commande de l'organe de manoeuvre (254) du mécanisme d'alimentation de fils d'entretoise afin de disposer un fil d'entretoise à angle droit avec les fils longitudinaux bloqués par lesdites ailes d'arrêt et commande de l'unité de soudage (251) des treillis en vue de souder les fils longitudinaux terminaux et les autres fils longitudinaux audit fil d'entretoise aux points de croisement respectifs.

f) commande du dispositif de coupe (278) en vue de couper des parties desdits fils d'entretoise de référence situés à l'extérieur par rapport aux fils longitudinaux d'extrémité (34) d'un treillis (36);

g) commande en avant de l'arbre (276) du moteur de l'organe d'avancement en vue d'engager ladite dent (272) au contact d'un fil d'entretoise (35) pour déplacer en avant le treillis sur une distance définissant le pas entre deux fils d'entretoise du treillis;

h) répétition des étapes e) à g) jusqu'à ce que les soudages d'un treillis soient complètement réalisées et enlèvement du treillis hors de la machine;

i) commande en marche arrière de l'arbre du moteur dudit organe d'avancement pour renvoyer ladite dent (272) dans ladite zone de soudage; et

j) répétition des étapes d) à i).

3. Procédé tel que défini à la revendication 2, caractérisé en ce que les fils longitudinaux (34) desdits treillis sont coupés à des longueurs prédéterminées qui déterminent la dimension longitudinale du treillis.

4. Machine (40) destinée à l'assemblage de structures métalliques tridimensionnelles (30) comportant des treillis plans (36) qui doivent être soudés à des fils transversaux (37) dans lesquels chaque treillis (36) comporte deux fils longitudinaux externes (34) et la machine comporte une paire d'unité de soudage (43), chacune comportant une paire d'électrodes (163, 165) adjacentes aux treillis et qui puis peuvent être commandées en vue de souder un fil transversal (37) aux treillis dans des zones de croisement correspondantes et pour déplacer au moins les premières électrodes (165) de ladite paire d'électrodes de la zone de croisement, respectivement, et un groupe d'avancement (45) peut être actionné pour faire avancer les treillis après la soudage des fils transversaux (37) aux treillis, caractérisée par:

a) une série de plus de deux supports (80) destinés à retenir une série desdits treillis (36) dans des plans parallèles (81) espacés de façon appropriée les uns des autres suivant un pas de treillis déterminé et comportant des moyens d'alignement (85) destinés à mettre les fils longitudinaux externes (34) d'au moins un côté d'une série desdits treillis (36) substantiellement dans le même plan avec un côté du plan de référence dans la structure (30) qui doit être assemblée perpendiculairement auxdits plans parallèles, dans lesquelles chacun desdits treillis à assembler comprend divers groupes de fils d'entretoise (35) soudés aux fils longitudinaux externes (34) selon un pas fixe correspondant à l'espacement entre deux entretoises;

b) une pluralité de leviers dentés (190) et un organe de manoeuvre des dents (182) dudit mécanisme d'alimentation dans lequel l'organe de manoeuvre des dents est connecté avec les dents d'alimentation et peut être manoeuvré pour imposer à chaque levier denté une trajectoire et qui coupe un fil d'entretoise (35) d'un treillis correspondant (36) pour déplacer le treillis correspondant d'un pas correspondant au pas séparant deux fils transversaux le long d'un dispositif de support dans lequel les leviers dentés ont au moins un bord d'attaque qui est aligné sur un plan de déplacement perpendiculaire aux plans parallèles, une suite de fils d'entretoise (35) appartenant à la série desdits treillis étant disposée dans une position fixe par rapport aux paires d'électrodes (163, 165) desdites unités de soudage (43);

c) un dispositif de positionnement (42) capable de disposer une paire desdits fils transversaux (37) sur les côtés desdites séries de treillis qui sont adjacents aux électrodes de soudage afin de positionner une paire desdits fils transversaux dans des positions prédéterminées par rapport aux fils d'entretoise; et

d) une unité de commande électronique (57) commandant chaque organe de manoeuvre des dents (182) pour déplacer les séries desdits treillis par rapport aux électrodes à l'aide des leviers dentés et cela d'une distance égale aux pas séparant deux fils transversaux dans un rapport fixe par rapport au pas qui sépare deux fils d'entretoise.

5. Machine selon la revendication 4, caractérisée en ce que lesdits supports (80) comprennent des plans de support (81) pour lesdits treillis et une paire d'éléments de guidage (92, 93) terminaux présentant une section transversale en U pour disposer avec précision lesdits fils longitudinaux dans une zone proche des électrodes de soudage.

6. Machine selon l'une quelconque des revendications 4 ou 5, caractérisée en ce que ladite surface de support comprend une première série de guides (86) et une seconde série de guides (87) qui coopèrent à glissement avec une première partie et avec une seconde partie respectivement desdits treillis pour déterminer un autre plan de référence latéral parallèle audit plan de référence.

7. Machine selon l'une quelconque des revendications 4 à 6, caractérisée en ce que ledit moyen d'alignement (85) comprend une première série d'éléments de guidage fixes (86) qui déterminent ledit premier plan de référence de ladite structure et une seconde série d'éléments de guidage mobiles (87) qui définissent un autre plan de référence latéral de la structure en substance parallèlement audit premier plan de référence et un organe de commande pour réaliser la mise à distance variable desdits éléments mobiles par rapport à la série des éléments fixes afin de guider des séries de treillis de différentes largeurs.

8. Machine selon l'une quelconque des revendications 4 à 7, caractérisée à ce que le dispositif de positionnement comprend, pour chaque fil transversal un organe longitudinal (126) équipé d'organes (127) pour agripper les fils transversaux et un organe de manoeuvre (124) qui impose à l'organe longitudinal et au fil transversal engagé une trajectoire partant d'une position intermédiaire parallèle au plan le plus large de la structure et se terminant à la zone de croisement sur l'un des côtés des treillis.

9. Machine telle que définie à la revendication 8, caractérisée en ce que ledit organe de manoeuvre déplace ledit organe longitudinal le long d'une direction oblique par rapport audit plan de référence latéral.

10. Machine selon l'une quelconque des revendications 4 à 9, caractérisée en ce qu'elle comprend deux trémies (101) pour des fils transversaux, contenant des fils transversaux (37) non assemblés du côté de la série de treillis et dans laquelle le dispositif de positionnement comprend un bras (111) équipé d'organes de prise (114) pour saisir à un fil transversal stocké dans la trémie et un organe de manoeuvre intermédiaire (113) connecté au bras qui peut être manoeuvré pour imposer au bras une trajectoire partant de la trémie et se terminant dans une zone d'alimentation parallèle à la surface latérale de référence de la structure, et dans laquelle l'organe de manoeuvre déplace ledit bras le long d'une direction à angle droit par rapport à ladite surface de référence de la structure (30).

11. Machine selon l'une quelconque des revendications 4—10, caractérisée en ce que chaque organe de manoeuvre des dents est connecté opérativement à un organe commun longitudinal (84) portant les leviers dentés (190) pour provoquer une course en avant et en arrière parallèlement aux fils longitudinaux des treillis, dans laquelle chaque levier denté (190) est monté à pivotement sur un organe longitudinal commun et maintenu normalement en position active dans laquelle chaque levier denté comprend, en plus du bord de rencontre (193), un bord incliné (194) coopérant avec les fils d'entretoise du treillis correspondant, le bord de rencontre (193) pouvant venir en contact avec un fil d'entretoise (35) au cours de la course avant de l'organe commun destiné à alimenter le treillis de la distance d'un pas entre deux fils transversaux, ledit bord incliné pouvant venir en contact avec le fil d'entretoise suivant pour faire pivoter la dent jusque dans une position dans laquelle elle n'est plus active sans déplacer les treillis et pour mettre en position la dent derrière le fil d'entretoise suivant au cours du mouvement arrière de l'organe à mouvement longitudinal.

12. Machine selon la revendication 11, caractérisée en ce que chaque dent d'alimentation (190) comprend un autre bord de rencontre et un autre bord incliné tandis que la distance entre les bords de rencontre de chaque dent est égale en substance à la moitié du pas entre deux fils d'entretoise des treillis et les courses avant et arrière de l'organe commun à mouvement longitudinal (84) sont en substance de la moitié du pas séparant deux fils d'entretoise (35) et en substance égale ou légèrement supérieure au pas des fils d'entretoise.

13. Machine destinée à l'assemblage de treillis plans (36) pour réalisation de structures métalliques tridimensionnelles (30) du type qui comporte une paire de fils longitudinaux terminaux (34) qui doivent être soudés à des fils d'entretoise (35), machine qui comprend une unité de soudage d'un treillis définissant une zone de soudage et qui peut être actionnée pour souder les fils d'entretoise aux fils longitudinaux et un mécanisme d'alimentation de fils longitudinaux (270) qui peut être commandé pour déplacer les treillis après l'opération de soudage à un fil d'entretoise (35) caractérisée par:

- un mécanisme d'alimentation des fils d'entretoise (251) qui comporte une trémie (252) disposée en avant par rapport à ladite zone de soudage et qui comporte un groupe de fils d'entretoise, un organe de manoeuvre (254) qui peut être actionné pour relâcher sélectivement ledit fil d'entretoise, des barres inclinées (253) pour guider un fil d'entretoise relâché, en arrière par rapport à ladite électrode fixe et des ailes d'arrêt (258) pour arrêter ledit fil d'entretoise relâché dans ladite zone de soudage perpendiculairement aux fils longitudinaux (34);

- au moins un mécanisme de coupe (278) qui peut être actionné pour définir un plan de coupe adjacent aux fils longitudinaux d'extrémité perpendiculairement audit plan des treillis (36) pour définir la largeur du treillis;

- dans laquelle ledit mécanisme d'alimentation longitudinale comprend une chaîne (273) portant une dent d'alimentation (272) pour déplacer la dent le long de la trajectoire interférant avec un fil d'entretoise soudé (35) et un arbre de servo moteur (276) destiné à entraîner ladite chaîne et comportant un codificateur d'extension (275) pour capter la position angulaire de l'arbre dudit moteur;

- des moyens de commande électroniques (282) pour commander le servo moteur de l'organe de manoeuvre (254) pour ledit mécanisme d'alimentation en fils d'entretoise, l'unité de soudage et ledit mécanisme de coupe;

- des moyens de commande électroniques agissant selon une séquence qui comprend la commande de l'organe de manoeuvre dudit mécanisme d'alimentation en fils d'entretoise afin de mettre un fil d'entretoise à angle droit avec les fils longitudinaux, arrêtés par lesdites ailes d'arrêt;

- l'actionnement de l'unité de soudage destinée au soudage des fils longitudinaux terminaux et des autres fils longitudinaux sur ledit fil d'entretoise et cela dans les points d'intersection respectifs.

- l'actionnement du mécanisme de coupe pour couper des parties dudit fil d'entretoise de référence, soudé, et se trouvant à l'extérieur des fils longitudinaux externes du treillis; et

- lesdits moyens de commande électroniques provoquant la rotation en marche avant de l'arbre du moteur du mécanisme d'alimentation des fils longitudinaux forçant la dent d'alimentation à venir en contact avec un fil d'entretoise soudé pour déplacer en avant le treillis d'une course qui détermine un pas entre deux fils d'entretoise dans le treillis et un mouvement en marche arrière de l'arbre du moteur du mécanisme d'alimentation en fils longitudinaux provoquant le retour de la dent dans la zone de soudage lorsque tous les fils d'entretoise ont été soudés.

**Patentansprüche**

1. Verfahren zum Zusammenbauen von dreidimensionalen metallischen Strukturen, umfassend ebene Gitter (36) und Paare von Querdrähten (37), die senkrecht zu den ebenen Gittern (36) sind, und das mit Hilfe eines Paars von Schweißeinheiten (43), von denen jede mit einer Mehrzahl von Paaren von Elektroden (154, 155) benachbart den Gittern ausgerüstet ist, die zum Zwecke des Verschweißens eines Paars von Querdrähten mit einem Paar von Längsdrähten (34) der Gitter in den entsprechenden Zonen, wo sich diese kreuzen, gesteuert werden können, und eines Vorschubmechanismus (45), der zum Vorschieben der Struktur nach dem Vorgang des Verschweißens der Querelemente (37) mit den Gittern (36) gesteuert werden kann, wobei dieses Verfahren durch die folgenden Schritte gekennzeichnet ist.

a) Anordnung einer Reihe von mehr als zwei Trägern (80), welche eine Reihe von parallelen Ebenen (81) definieren, die gemäß einem Schritt der Bildung von vorbestimmten Gittern im Abstand voneinander angeordnet sind, und welche Mittel der Ausrichtung (85) zum Definieren einer gemeinsamen Fluchtungsebene, die senkrecht zu den parallelen Ebenen ist, aufweisen;

b) Anordnung des Vorschubmechanismus (45), der mehrere gezahnte Hebel (190) hat, die den Trägern (80) zugeordnet und durch eine Zahnbetätigungsvorrichtung (182) verbunden sind, worin die Zahnbetätigungsvorrichtung zum Zwecke des Verlagerns jedes gezahnten Hebels längs einer Laufbahn, welche einer der parallelen Ebenen entspricht, gesteuert werden kann, und worin jeder gezahnte Hebel wenigstens einen Kontrollrand (193) aufweist, der in einer Ebene fluchtet, die senkrecht zu den parallelen Ebenen ist;

c) Anordnung einer Reihe der erwähnten Gitterebenen, worin die verschiedenen Aufeinanderfolgen von Querverbindungsdrähten (35) mit einem Paar von Längsdrähten gemäß einem bestimmten Schritt, der für die Querdrähte geeignet ist, verschweißt werden;

d) Anordnung jeder Gitterreihe (36) auf einem gemeinsamen Träger, der zu der erwähnten Reihe von Trägern (80) gehört, in der Weise, daß die Gitterreihen wenigstens ein Paar der erwähnten Längsdrähte haben, die in einer gemeinsamen Ebene und parallel zu der erwähnten gemeinsamen Fluchtungsebene angeordnet sind;

e) Steuern der Zahnbetätigungsvorrichtung (182) zum Zwecke des Realisierens von Verlagerungen der Gitter (36) längs parallelen Ebenen dank der Wirkung des Kontrollrands (139) jedes Zahns auf die gleiche Reihe von Querverbindungsdrähten der erwähnten Gitterreihe, bis die Gitter in die gewollte Position bezüglich der erwähnten Elektroden gebracht sind, um die Querverbindungsdrähte (35) in eine gleiche Ebene zu legen und eine Auflageebene zu definieren;

f) Anordnung eines Paars von Querdrähten (37) zum Zwecke des Kreuzens der Längsdrähte (34) einer Gitterreihe in den entsprechenden Kreuzungszonen;

g) Steuern eines Paars von Schweißeinheiten (43) zum Zwecke des Verschweißens der Querdrähte (37) mit den Gitterreihen und zu deren darauffolgenden Abführen aus der Kreuzungszone;

h) Steuern der Zahnbetätigungsvorrichtung (182), um die erwähnte Gitterreihe zum Verlagern längs der parallelen Ebenen um einen Schritt, der demjenigen der Querdrähte entspricht, dank der Wirkung der gezahnten Hebel (190) vorzuschieben;

i) Wiederholung der Schritte f) bis h), bis die Paare von Querdrähten (37) mit den Längsdrähten der erwähnten Gitterreihen verschweißt sind.

2. Verfahren zum Zusammenbauen von ebenen Gittern (36), die für dreidimensionale metallische Strukturen (30) bestimmt sind, welche ein Paar von Längsdrähten (34) und Querverbindungsdrähte (35) haben, mit Hilfe einer Schweißeinheit (38), die eine Schweißzone definiert und die zum Zwecke des Verschweißens der Querverbindungsdrähte (35) mit den Längsdrähten (34) gesteuert werden kann, und einer Vorschubvorrichtung (270), die zum Zwecke des Verlagerns der Gitter nach dem Anschweißen eines Querverbindungsdrahts (35) gesteuert werden kann, wobei dieses Verfahren Mittel zum Tragen (248) umfaßt, die Führungen in der Nähe der Schweißzone zum Führen eines Paars von Längsdrähten und von anderen Längsdrähten, die sich in einer gleichen Ebene, wie es diejenige des ebenen Gitters ist, befinden, haben, gekennzeichnet durch die folgenden Schritte:

a) Vorsehen einer Vorrichtung (250) zum Zuführen von Drähten und enthaltend einen Trichter (252), der bezüglich der Schweißzone (261) vorwärts angeordnet ist und eine Gruppe der Querverbindungsdrähte (35) enthält, eine Betätigungsvorrichtung (254) zum selektiven Freigeben jedes Querverbindungsdrahts, geneigte Stangen (253) zum Führen eines freigegebenen Querverbindungsdraht und zum Wegstoßen desselben rückwärts bezüglich der erwähnten festen Elektrode, und Anschlagschenkel (258) zum Anhalten des freigegebenen Querverbindungsdrahts in der Schweißzone (261) senkrecht zu den Längsdrähten (34);

b) Vorsehen von wenigstens einer Schneidvorrichtung (278), die zum Definieren einer Schneidebene benachbart den Längsdrähten und senkrecht zu der Ebene der Gitter (36) zum Festlegen der Breite des Gitters gesteuert werden kann;

c) Vorsehen einer Vorrichtung zum Zuführen von Längsdrähten, die mit einem Zahn (272) ausgerüstet ist, und zwar zum Verlagern desselben längs einer Laufbahn, die mit einem angeschweißten Querverbindungsdraht interferiert, mit Hilfe einer Kette (273), welche durch die Achse (276) eines Motors angetrieben wird, gesteuert durch einen Längungskodierer (275) und einen Mikroprozessor (282);

d) Anordnung eines Paars von Längsdrähten (34) und anderer Längsdrähte auf den Mitteln zum Tragen;

e) Steuern der Betätigungsvorrichtung (254) des Meschanismus zum Zuführen von Querverbindungsdrähten, um einen Querverbindungsdraht rechtwinklig zu den Längsdrähten anzuordnen, und zwar blockiert durch die erwähnten Anschlagschenkel und gesteuert von der Schweißeinheit (251) für die Gitter zum Zwecke des Verschweißens der Endlängsdrähte und der anderen Längsdrähte mit dem Querverbindungsdraht an den jeweiligen Kreuzungsstellen;

f) Steuern der Schneidvorrichtung (278) zum Zwecke des Abschneidens der Teile der erwähnten Referenzquerverbindungsdrähte, die sich außen bezüglich der Längsdrähte eines Endes (34) eines Gitters (36) befinden;

g) Vorwartssteuern der Welle (276) des Motors der Vorschubvorrichtung zum Zwecke des Ineingriffbringens des erwähnten Zahns (272) in Kontakt mit einem Querverbindungsdraht (35) zum Vorwärtsverlagern des Gitters über eine Distanz, welche den Schritt zwischen zwei Querverbindungsdrähten des Gitters definiert;

h) Wiederholen der Schritte e) bis g), bis die Schweißungen eines Gitters vollständig verwirklicht worden sind, und Abnahme des Gitters heraus aus der Maschine;

i) Steuern der Welle des Motors der Vorschubvorrichtung im Rückwärtsgang zum Zurückschieben des erwähnten Zahns (272) in die Schweißzone; und j) Wiederholung der Schritte d) bis i).

3. Verfahren nach Anspruch 2, dadurch gekennzeichnet, daß die Längsdrähte (34) der Gitter auf vorbestimmte Längen zugeschnitten werden, welche die Längsdimension des Gitters bestimmen.

4. Maschine (40), die zum Zusammenbauen von dreidimensionalen metallischen Strukturen (30) bestimmt ist, welche ebene Gitter (36) haben, die mit Querdrähten (37) verschweißt werden müssen, worin jedes Gitter (36) zwei äußere Längsdrähte (34) enthält und die Maschine ein Paar Schweißeinheiten (43) hat, von denen jede ein Paar von Elektroden (163, 165) benachbart den Gittern hat, und die danach zum Zwecke des Verschweißens eines Querdrahts (37) mit den Gittern in den entsprechenden Kreuzungszonen und zum Verlagern von wenigstens den ersten Elektroden (165) des erwähnten Paars von Elektroden jeweils aus der Kreuzungszone gesteuert werden können, und eine Vorschubgruppe (45), die betätigt werden kann, um die Gitter nach dem Verschweißen der Querdrähte (37) mit den Gittern vorzuschieben, gekennzeichnet durch:

a) eine Reihe von mehr als zwei Trägern (80), die dazu bestimmt sind, eine Reihe der erwähnten Gitter (36) in parallelen Ebenen (81) zu halten, welche geeigneterweise im Abstand voneinander gemäß einer bestimmten Teilung des Gitters angeordnet sind und Mittel (85) zur Ausrichtung haben, die dazu bestimmt sind, die äußeren Längsdrähte (34) wenigstens einer Seite einer Reihe der erwähnten Gitter (36) im wesentlichen in der gleichen Ebene wie die eine Seite der Bezugsebene in der Struktur (30), die senkrecht zu den erwähnten parallelen Ebenen zusammengebaut werden soll, zu legen, worin jedes der zusammenzubauenden Gitter verschiedene Gruppen von Querverbindungsdrähten (35) umfaßt, die mit äußeren Längsdrähten (34) gemäß einem festen Schritt, welcher dem Abstand zwischen zwei Querverbindungen entspricht, verschweißt sind;

b) eine Mehrzahl von gezahnten Hebeln (190) und eine Zahnbetätigungsvorrichtung (182) des erwähnten Mechanismus zum Zuführen, worin die Zahnbetätigungsvorrichtung mit den Zähnen zur Zuführung verbunden ist und dahingehend betätigt werden kann, daß sie jedem gezahnten Hebel eine Laufbahn aufzwingt, und welche einen Querverbindungsdraht (35) eines entsprechenden Gitters (36) durchschneidet, um das entsprechende Gitter um einen Schritt, der dem Schritt entspricht, welcher zwei Querdrähte trennt, längs einer Vorrichtung zum Tragen zu verlagern, worin die gezahnten Hebel wenigstens einen Angriffsrand haben, der auf einer Verlagerungsebene ausgerichtet ist, die senkrecht zu den parallelen Ebenen ist, wobei eine Folge von Querverbindungsdrähten (35), die zu der Reihe der erwähnten Gitter gehört, in einer festen Position mit Bezug auf die Paare von Elektroden (163, 165) der Schweißeinheiten (43) angeordnet ist;

c) eine Vorrichtung zum Positionieren (42), die in der Lage ist, ein Paar der erwähnten Querdrähte (37) auf den Seiten der Gitterreihen, die benachbart den Schweißelektroden sind, anzuordnen, um ein Paar der Querdrähte in den vorbestimmten Positionen mit Bezug auf die Querverbindungsdrähte zu positionieren; und

d) eine Einheit (57) zur elektronischen Steuerung, welche jede Zahnbetätigungsvorrichtung (182) zum Verlagern der Gitterreihen mit Hilfe der gezahnten Hebel mit Bezug auf die Elektroden steuert, und das um einen Abstand, der gleich dem Schritt ist, welcher zwei Querdrähte trennt, in einem festen Verhältnis mit Bezug auf den Schritt, welcher zwei Querverbindungsdrähte trennt.

5. Maschine nach Anspruch 4, dadurch gekennzeichnet, daß die erwähnten Träger (80) Trägerebenen (81) für die Gitter umfassen und ein Paar Endführungselemente (92, 93), welche einen U-Querschnitt aufweisen, zum Anordnen der Längsdrähte mit Präzision in einer Zone nahe den Schweißelektroden.

6. Maschine nach irgendeinem der Ansprüche 4 oder 5, dadurch gekennzeichnet, daß die erwähnte Trägeroberfläche eine erste Reihe von Führungen (86) und eine zweite Reihe von Führungen (87) umfaßt, welche mit Gleitung der Gitter mit einem ersten Teil bzw. mit einem zweiten Teil zusammenwirken, und zwar zum Bestimmen einer anderen seitlichen Bezugsebene, die parallel zu der erwähnten Bezugsebene ist.

7. Maschine nach irgendeinem der Ansprüche 4 bis 6, dadurch gekennzeichnet, daß das erwähnte Mittel zum Ausrichten (85) eine erste Reihe von festen Führungselementen (86) umfaßt, welche die erwähnte erste Bezugsebene der Struktur bestimmen, und eine zweite Reihe von beweglichen Führungselementen (87), welche eine andere seitliche Bezugsebene der Struktur definieren, die im wesentlichen parallel zu der ersten Bezugsebene ist, und ein Steuerorgan zum Realisieren des Setzens der erwähnten beweglichen Elemente in variablem Abstand mit Bezug auf die Reihe der festen Elemente, um die Gitterreihen unterschiedlicher Breiten zu führen.

8. Maschine nach irgendeinem der Ansprüche 4 bis 7, dadurch gekennzeichnet, daß die Vorrichtung zum Positionieren für jeden Querdraht ein Längsorgan (126) umfaßt, das mit Organen (127) zum Greifen der Querdrähte ausgerüstet ist, und ein Betätigungsorgan (124), welches dem Längsorgan und dem in Eingriff stehenden Querdraht eine Laufbahn aufzwingt, ausgehend von einer Zwischenposition, parallel zur breitesten Ebene der Struktur, und endend in der Kreuzungszone auf einer der Seiten der Gitter.

9. Maschine nach Anspruch 8, dadurch gekennzeichnet, daß das Betätigungsorgan das erwähnte Längsorgan längs einer Richtung verlagert, die schräg bezüglich der erwähnten seitlichen Bezugsebene ist.

10. Maschine nach irgendeinem der Ansprüche 4 bis 9, dadurch gekennzeichnet, daß sie zwei Trichter (101) für Querdrähte umfaßt, die nicht zusammengebaute Querdrähte (37) der Seite der Gitterreihe enthalten, und worin die Vorrichtung zum positionieren einen Arm (111) umfaßt, der mit Greiforganen (114) zum Greifen eines Querdrahts ausgerüstet ist, welcher in dem Trichter gespeichert ist, und eine zwischenliegende Betätigungsvorrichtung (113), die mit dem Arm verbunden ist, welche dahingehend betätigt werden kann, daß sie dem Arm eine Laufbahn aufzwingt, die von dem Trichter ausgeht und in einer Zuführungszone endet, und zwar parallel zu der seitlichen Bezugsfläche der Struktur, und worin die Betätigungsvorrichtung den Arm längs einer Richtung rechtwinklig bezüglich der erwähnten Bezugsoberfläche der Struktur (30) verlagert.

11. Maschine nach irgendeinem der Ansprüche 4 bis 10, dadurch gekennzeichnet, daß jede Zahnbetätigungsvorrichtung operativ mit einem längsverlaufenden gemeinsamen Organ (84) verbunden ist, das die gezahnten Hebel (190) trägt, um einen Lauf vorwärts und rückwärts prallel zu den Längsdrähten der Gitter zu veranlassen, worin jeder gezahnte Hebel (190) drehbar auf einem gemeinsamen Längsorgan angebracht ist und normalerweise in aktiver Position gehalten wird, worin jeder gezahnte Hebel außer dem Auftreffrand (193) einen geneigten Rand (194) umfaßt, der mit den Querverbindungsdrähten des entsprechenden Gitters zusammenwirkt, wobei der Auftreffrand (193) im Verlauf des Vorwärtslaufs des gemeinsamen Organs, das zum Zuführen des Gitters um eine Distanz von einem Schritt zwischen zwei Querdrähten bestimmt ist, in Kontakt mit einem Querverbindungsdraht (35) kommen kann, wobei der erwähnte geneigte Rand in Kontakt mit dem nachfolgenden Querverbindungsdraht kommen kann, um den Zahn bis in eine Position zu verdrehen, in welcher er nicht mehr aktiv ist, ohne die Gitter zu verlagern, und zum Inpositionsetzen des Zahns hinter dem nachfolgenden Querverbindungsdraht im Verlauf der Rückwärtsbewegung des Längsbewegungsorgans.

12. Maschine nach Anspruch 11, dadurch gekennzeichnet, daß jeder Zuführungszahn (190) einen anderen Auftreffrand und einen anderen geneigten Rand umfaßt, während der Abstand zwischen den Auftreffrändern jedes Zahns im wesentlichen gleich der Hälfte des Schritts zwischen zwei Querverbindungsdrähten der Gitter ist und die Vorwärts- und Rückwärtsläufe des gemeinsamen Organs (84) zur Längsbewegung im wesentlichen die Hälfte des Schritts sind, welcher zwei Querverbindungsdrähte (35) trennt, und im wesentlichen gleich der oder ein wenig größer als die Teilung der Querverbindungsdrähte sind.

13. Maschine, die zum Zusammenbauen von ebenen Gittern (36) für die Verwirklichung von dreidimensionalen metallischen Strukturen (30) der Art bestimmt ist, welche ein Paar von Endlängsdrähten (34) hat, die mit Querverbindungsdrähten (35) verschweißt werden müssen, wobei die Maschine eine Schweißeinheit für ein Gitter umfaßt, welche eine Schweißzone definiert und welche zum Verschweißen der Querverbindungsdrähte mit den Längsdrähten betätigt werden kann, und einen Zuführungsmechanismus für Längsdrähte (270), der zum Verlagern der Gitter nach dem Vorgang des Verschweißens eines Querverbindungsdrahts (35) gesteuert werden kann, gekennzeichnet durch:

- einen Zuführungsmechanismus fur Querverbindungsdrähte (251), der einen Trichter (252) hat, welcher mit Bezug auf die erwähnte Schweißzone vorwärts angeordnet ist und welcher eine Gruppe von Querverbindungsdrähten enthält, eine Betätigungsvorrichtung (254), die zum selektiven Freigeben des erwähnten Querverbindungsdrahts betätigt werden kann, geneigte Stangen (253) zum Führen eines freigegebenen Querverbindungsdrahts, und zwar rückwärts mit Bezug auf die erwähnte feste Elektrode, und Anschlagschenkel (258) zum Anhalten des freigegebenen Querverbindungsdrahts in der Schweißzone senkrecht zu den Längsdrähten (34);

- wenigstens einen Schneidmechanismus (278), der zum Definieren einer Schneidebene benachbart den Längsdrähten des Endes senkrecht zu der Ebene der Gitter (36) betätigt werden kann, um die Breite des Gitters zu bestimmen;

- worin der Mechanismus zur Längszuführung eine Kette (273), die einen Zuführungszahn (272) trägt, zum Verlagern des Zahns längs der Laufbahn, welche mit einem angeschweißten Querverbindungsdraht (35) interferiert, umfaßt, und eine Welle eines Servomotors (276), der dazu bestimmt ist, die Kette anzutreiben und einen Längungskodierer (275) zum Erfassen der Winkelposition der Welle des erwähnten Motors hat;

- elektronische Steuermittel (282) zum Steuern des Servomotors der Betätigungsvorrichtung (254) für den erwähnten Mechanismus zum Zuführen von Querverbindungsdrähten, der Schweißeinheit und des Schneidmechanismus;

- elektronische Steuermittel, die gemäß einer Aufeinanderfolge wirksam sind, welche die Steuerung der Betätigungsvorrichtung des Mechanismus zur Zuführung von Querverbindungsdrähten umfaßt, um einen Querverbindungsdraht rechtwinklig zu den Längsdrähten zu legen, und zwar angehalten durch die Anschlagschenkel;

- die Betätigung der Schweißeinheit, welche zum Schweißen der Endlängsdrähte und der anderen Längsdrähte auf den Querverbindungsdraht, und das in den jeweiligen Schnittstellen, bestimmt ist;

- die Betätigung des Schneidmechanismus zum Schneiden der Teile des erwähnten Bezugsquerverbindungsdrahts, der verschweißt ist und sich auf der Außenseite der äußeren Längsdrähte des Gitters befindet; und

- wobei die erwähnten Mittel zur elektronischen Steuerung die Vorwärtsdrehung der Welle des Motors des Mechanismus zum Zuführen der Längsdrähte bewirken, welche den Zahn für die Zuführung dahingehend forciert, daß er in Kontakt mit einem verschweißten Querverbindungsdraht kommt, um das Gitter um einen Weg vorwärts zu verlagern, welcher einen Schritt zwischen zwei Querverbindungsdrähten in dem Gitter bestimmt, und eine Rückwärtsbewegung der Welle des Motors des Mechanismus zur Zurführung von Längsdrähten, welche die Rückkehr des Zahns in die Schweißzone bewirkt, wenn alle Querverbindungsdrähte verschweißt worden sind.

**Claims**

1. Method of assembling three-dimensional metal structures comprising flat lattices (36) and pairs of transverse wires (37) perpendicular to the flat lattices (36) and that with the aid of a pair of welding units (43) each equipped with a plurality of pairs of electrodes (154, 155) adjacent to the lattices which may be controlled with a view to welding a pair of transverse wires to a pair of longitudinal wires (34) of the lattices in corresponding zones where these cross and an advancing mechanism (45) which may be controlled to cause the structure to advance after the welding operation of the transverse elements (37) to the lattices (36) the said method being characterised by the following stages:

a) arrangement of a series of more than two supports (80) defining a series of parallel planes (81) spaced from one another according to a determined lattice formation pitch presenting means of alignment (85) to define a common plane of alignment perpendicular to the said parallel planes;

b) arrangement of the said advancing mechanism (45) comprising several toothed levers (190) associated with the said supports (80) and connected by a teeth operating member (182) in which the teeth operating member may be controlled with a view to displacing each toothed lever along a trajectory corresponding to one of the parallel planes and in which each toothed lever presents at least one control edge (193) aligned on a plane perpendicular to the said parallel planes;

c) arrangement of a series of the said lattices in which the varios successions of cross-piece wires (35) are welded to a pair of longitudinal wires according to a determined pitch adapted to the cross-piece wires;

d) arrangement of each series of supports (80) such that the said series of lattices have at least one pair of longitudinal wires disposed in a common plane and parallel to the common alignment plane;

e) control of the teeth operating member (182) with a view to realising displacements of the said lattices (36) along parallel planes owing to the action of the control edge (193) of each tooth on a same series of cross-piece wires of the said series of lattices until bringing into the desired position the said lattices in respect of the said electrodes in order to put the said cross-piece wires (35) in a same plane and to define a support plane;

f) arrangement of a pair of transverse wires (37) with a view to crossing the longitudinal wires (34) of a series of lattices in the corresponding crossing zones;

g) control of a pair of welding units (43) with a view to welding the said transverse wires (37) to the series of lattices and then to remove them from the crossing zone.

h) control of the teeth operating member (182) to cause the said series of lattice to advance to displace along the parallel planes by a step corresponding to that of the transverse wires due to the action of the said toothed levers (190);

i) repetition of the steps b) to h) until the pairs of transverse wires (37) have been welded to the longitudinal wires of the said series of lattices.

2. Method of assembling flat lattices (36) intended for three-dimensional metal structures (30) comprising a pair of longitudinal wires (34) and cross-piece wires (35) with the aid of a welding unit (38) defining a welding zone and which may be controlled with a view to welding the cross-piece wires (35) to the longitudinal wires (34) and an advancing member (270) which may be controlled with a view to displacing the lattices after the welding of a cross-piece wire (35) the said method comprising supporting means (248) having guides in the vicinity of the welding zone in order to guide a pair of longitudinal wires and other longitudinal wires located in a same plane as that of the lattice plane, characterised by the following steps:

a) provision of a device (25) for the feeding of the wires and comprising a hopper (252) disposed in front in relation to the said welding zone (261) and having a group of the said cross-piece wires (35), an operating member (254) to release selectively each cross-piece wire, inclined bars (253) to guide a loose cross-piece wire and to push it backwards in respect of the said fixed electrode and stop flaps (258) to stop in the said welding zone (261) perpendicularly to the longitudinal wires (34) the said loose cross-piece wire;

b) provision of at least one cutting device (278) which may be controlled to define a cutting plane adjacent to the longitudinal wires and perpendicular to the said plane of the lattices (36) to device the width of the lattice;

c) provision of a longitudinal wire feeding device equipped with a tooth (272) to be displaced along a trajectory which interferes with a welded cross-piece wire with the aid of a chain (273) driven by the axle (276) of a motor controlled by an extension codifier (275) and a microprocessor (282);

d) arrangement of a pair of longitudinal wires (34) and other longitudinal wires on the said supporting means;

e) control of operating member (254) of the crosspiece wire feeding medium so as to dispose a crosspiece wire at a right angle to the longitudinal wires blocked by the said stop flaps and control of the welding unit (251) of the lattices with a view to welding the terminal longitudinal wires and the other longitudinal wires to the said cross-piece wire at the respective crossing points;

f) control of the cutting device (278) with a view to cutting parts of the said reference cross-piece wires located outside in relation to the end longitudinal wires (34) of a lattice (36);

g) forward control of the shaft (276) of the motor of the advancing member with a view to engaging the said tooth (272) to the contact of a cross-piece wire (35) to displace forward the lattice over a distance defining the pitch between two cross-piece wires of the lattice;

h) repetition of the steps e) to g) until the weldings of a lattice are completely realised and removal of the lattice out of the machine;

i) reverse control of the shaft of the motor of the said advancing member to return the said tooth (272) to the said welding zone; and

j) repetition of steps d) to j).

3. Method as defined in Claim 2, characterised in that the longitudinal wires (34) of the said lattices are cut to predetermined lengths which determine the longitudinal dimension of the lattice.

4. Machine (40) intended for the assembling of three-dimensional metal structures (30) comprising flat lattices (36) which have to be welded to transverse wires (37) in which each lattice (36) comprises two outer longitudinal wires (34) and the machine comprises a pair of welding units (43) each comprising a pair of electrodes (163, 165) adjacent to the lattices and which may then be controlled with a view to welding a transverse wire (37) to the lattices in corresponding crossing zones and to displace at least the first electrodes (165) of the said pair of electrodes of the crossing zone respectively and an advancing group (45) may be operated to cause the lattices to advance after the welding of the transverse wires (37) to the lattice, characterised by:

a) a series of more than two supports (80) intended to hold a series of the said lattices (36) in parallel planes (81) spaced in a suitable manner from one another according to a determined lattice pitch and comprising alignment means (85) intended to put the outer longitudinal wires (34) of at least one side of a series of the said lattices (36) substantially in the same plane with one side of the reference plane in the structure (30) which must be assembled perpendicularly to the said parallel planes in which each of the said lattices to be assembled comprises different groups of cross-piece wires (35) welded to the outer longitudinal wires (34) according to a fixed pitch corresponding to the spacing between two crosspieces;

b) a plurality of toothed levers (190) and a teeth operating member (182) of the said feeding mechanism in which the teeth operating member is connected to the feed teeth and may be operated to impose on each toothed lever a trajectory and which cuts a cross-piece wire (35) of a corresponding lattice (36) to displace the corresponding lattice by a pitch corresponding to the pitch separating two transverse wires along a supporting device in which the toothed levers have at least one leading edge which is aligned on a plane of displacement perpendicular to the parallel planes, a sequence of cross-piece wires (35) belonging to the series of the said lattices being disposed in a position fixed in respect of the pairs of electrodes (163, 165) of the said welding units (43);

c) positioning device (42) capable of disposing a pair of the said transverse wires (37) on the sides of the said series of lattices which are adjacent to the welding electrodes so as to position a pair of the said transverse wires in predetermined position in respect of the cross-piece wires; and

d) an electronic control unit (57) controlling each teeth operating member (182) to displace the series of the said lattices in respect of the electrodes with the aid of toothed levers and by a distance equal to the pitches separating two transverse wires in a fixed relationship in respect of the pitch which separates two cross-piece wires.

5. Machine according to Claim 4, characterised in that the said supports (80) comprise planes of support (81) for the said lattices and a pair of terminal guide elements (92, 93) having a universal U section for disposing with precision the said longitudinal wires in a zone near the welding electrodes.

6. Machine according to either of the Claims 4 or 5, characterised in that the said support surface comprises a first series of guides (86) and a second series of guides (87) which cooperate sliding with a first part and with a second part respectively to determine another lateral reference plane parallel to the said reference plane.

7. Machine according to any of the Claims 4 to 6, characterised in that the said alignment means (85) comprises a first series of fixed guide elements (86) which determine the said first reference plane of the said structure and a second series of movable guide elements (87) which define another lateral reference plane of the structure substantially parallel to the said first reference plane and a control member for realising the placing at variable distance the said movable elements in respect of the series of fixed elements so as to guide series of lattices of different widths.

8. Machine according to any one of Claims 1 to 7, characterised in that the positioning device comprises for each transverse wire a longitudinal member (126) equipped with members (127) to grip the transverse wires and an operating member (124) which imposes on the longitudinal member and on the transverse wire engaged a trajectory from an intermediary position parallel to the widest plane of the structure and terminating at the crossing zone on one of the sides of the lattices.

9. Machine as defined in Claim 8, characterised in that the said operating member displaces the said longitudinal member along an oblique direction in respect of the said lateral reference plane.

10. Machine according to any one of the Claims 1 to 9, characterised in that it comprises two hoppers (101) for transverse wires containing non assembled transverse wires (37) of the side of the series of lattices and in which the positioning device comprises an arm (111) equipped with catch members (114) to seize a transverse wire stocked in the hopper and an intermediary operating member (113) connected to the arm which may be operated to impose on the arm a trajectory from the hopper and terminating in a feed zone parallel to the lateral reference surface of the structure and in which the operating member displaces the said arm along a direction at right angles in respect of the said reference surface of the structure (30).

11. Machine according to any one of the Claims 4—10, characterised in that each tooth operating member is operatively connected to a common longitudinal member (84) carrying toothed levers (190) to cause a forward and reverse running parallel to the longitudinal wires of the lattices in which each toothed lever (190) is pivotally mounted on a common longitudinal member and held normally in active position in which each toothed lever comprises in addition to the meeting edge (193), an inclined edge (194) cooperating with the cross-piece wires of the corresponding lattice, the meeting edge (193) being able to come in contact with a cross-piece wire (35) in the course of the forward running of the common member intended to feed the lattice by the distance of a pitch between two transverse wires, the said inclined edge being capable of coming in contact with the following cross-piece wire to cause the tooth to pivot as far as into a position in which it is no longer active without displacing the lattices and to put the tooth in position behind the following crosspiece wire in the course of backwards movement of the member with longitudinal movement.

12. Machine according to Claim 11, characterised in that each feed tooth (190) comprises another meeting edge and another inclined edge whilst the distance between the meeting edge of each tooth is equal substantially to half the pitch between two cross-piece wires of the lattices and the forward and reverse runnings of the common member with longitudinal movement (84) are substantially half of the pitch separating two cross-piece wires (35) and substantially equal or slightly greater than the pitch of the crosspiece wires.

13. Machine intended for the assembly of flat lattices (36) for realisation of three-dimensional metal structures (30) of the type which comprises a pair of terminal longitudinal wires (34) which have to be welded to cross-piece wires (35), a machine which comprises a welding unit of a lattice defining a welding zone and which may be actuated to weld the cross-piece wires to the longitudinal wires and a longitudinal wire feed mechanism (270) which may be controlled to displace the lattices after the operation of welding to a cross-piece wire (35) characterised by:

- a cross-piece wire feed mechanism (251) which comprises a hopper (252) disposed forward in respect of the said welding zone and which comprises a group of cross-piece wires, an operating member (254) which may be actuated to release selectively the said cross-piece wire, inclined bars (253) to guide a released crosspiece wire backwards in respect of the said fixed electrode and stop flaps (258) to stop the said released cross-piece wire in the said welding zone perpendicularly to the longitudinal wires (34);

- at least one cutting mechanism (278) which may be operated to define a cutting plane adjacent to the end longitudinal wire perpendicularly to the said plane of the lattices (36) to define the width of the lattice;

- in which the said longitudinal feed mechanism comprises a chain (273) carrying a feed tooth (272) to displace the tooth along the trajectory interferring with a welded cross-piece wire (35) and a servo motor shaft (276) intended to drive the said chain and comprising an extension codifier (275) to catch the angular position of the shaft of the said motor;

- electronic control means operating according to a sequence which comprises the control of the operating member of the said cross-piece wire feed mechanism so as to put a cross-piece wire at right angles to the longitudinal wires, stopped by the said stop flaps;

- the operation of the welding unit intended for the welding of the terminal longitudinal wires and other longitudinal wires on the said cross-piece wire and in the respective points of intersection;

- the operation of the cutting mechanism to cut parts of the said welded reference cross-piece wire and located outside the outer longitudinal wires of the lattice; and

- the said electronic control means causing the rotation in forward motion of the shaft of the motor of the longitudinal wire feed mechanism forcing the feed tooth to come in contact with a welded cross-piece wire to displace forward the lattice by a course which determines a pitch between two cross-piece wires in the lattice and a backwards motion movement of the shaft of the motor of the longitudinal wire feed mechanism causing the return of the tooth in the welding zone when all the cross-piece wires have been welded.

FIG.1

EP 0 162 183 B1

FIG.2

FIG. 3

FIG.9

FIG.4

EP 0 162 183 B1

FIG.5

FIG.6

FIG.8

FIG.7

6

FIG. 10

FIG. 11

FIG. 12

FIG. 14

FIG. 13

7

FIG. 15

FIG.16

FIG. 17

FIG. 18

FIG. 19

FIG.20